(19) Europäisches Patentamt
European Patent Office
Office européen des brevets

(11) EP 3 443 843 B1

(12) # EUROPEAN PATENT SPECIFICATION

(45) Date of publication and mention of the grant of the patent:
**13.11.2019 Bulletin 2019/46**

(21) Application number: **17782201.2**

(22) Date of filing: **23.03.2017**

(51) Int Cl.:
*A01N 59/16* (2006.01) *A01N 25/12* (2006.01)
*A01P 3/00* (2006.01) *D06M 11/83* (2006.01)
*A01N 25/08* (2006.01) *A01N 25/10* (2006.01)
*A01N 25/34* (2006.01) *C09D 5/14* (2006.01)
*A01N 25/02* (2006.01) *A01N 59/20* (2006.01)
*C09D 7/40* (2018.01)

(86) International application number:
**PCT/JP2017/011569**

(87) International publication number:
**WO 2017/179383 (19.10.2017 Gazette 2017/42)**

(54) **ANTIBACTERIAL COMPOSITION, ANTIBACTERIAL FILM AND WET WIPER**

ANTIBAKTERIELLE ZUSAMMENSETZUNG, ANTIBAKTERIELLE FOLIE UND NASSWISCHER

COMPOSITION ANTIBACTÉRIENNE, FILM ANTIBACTÉRIEN, ET CHIFFON HUMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2016 JP 2016080233**

(43) Date of publication of application:
**20.02.2019 Bulletin 2019/08**

(73) Proprietor: **FUJIFILM Corporation**
**Tokyo 106-8620 (JP)**

(72) Inventors:
- **HASEGAWA Kazuhiro**
  **Ashigarakami-gun**
  **Kanagawa 258-8577 (JP)**
- **SATO Naotoshi**
  **Ashigarakami-gun**
  **Kanagawa 258-8577 (JP)**
- **HAMANO Mitsumasa**
  **Ashigarakami-gun**
  **Kanagawa 258-8577 (JP)**

(74) Representative: **Jeffrey, Philip Michael**
**Dehns Germany**
**Theresienstraße 6-8**
**80333 München (DE)**

(56) References cited:
**EP-A1- 1 652 875** **EP-A1- 3 295 792**
**EP-A1- 3 342 290** **WO-A1-2010/073738**
**JP-A- H0 559 308** **JP-A- 2007 039 444**
**JP-A- 2007 211 004** **JP-A- 2009 018 075**
**JP-A- 2010 202 733** **JP-A- 2014 527 963**
**US-A1- 2008 233 204** **US-A1- 2009 060 967**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 443 843 B1

## Description

### BACKGROUND OF THE INVENTION

1. Field of the Invention

The present invention relates to an antibacterial composition, an antibacterial film, and a wet wiper.

2. Description of the Related Art

Antibacterial compositions including antibacterial agent particles, resins, and solvents are known. Antibacterial films formed using the antibacterial compositions are utilized in various usage applications. For example, JP2008-213206A describes an antibacterial film-forming solution including a solvent that includes an alcohol and water; a strong acid (provided that hydrochloric acid and nitric acid are excluded) catalyst; a tetrafunctional alkoxysilane; and silver microparticles and/or silver ions.

### SUMMARY OF THE INVENTION

The inventors of the present invention formed an antibacterial film using the antibacterial film-forming solution described in JP2008-213206A and conducted an investigation on the antibacterial properties on the surface of the antibacterial film, and the inventors found that the antibacterial properties tend to become non-uniform depending on the position on the antibacterial film (the antibacterial film does not have uniform antibacterial properties within the plane). This tendency was more noticeable in a case in which an antibacterial film was formed by applying the antibacterial film-forming solution on an article having concave-convex shapes on the surface. Furthermore, this tendency was more noticeable in a case in which a wet wiper was produced by impregnating a base cloth with the antibacterial film-forming solution, and an antibacterial film is formed by applying the antibacterial film-forming solution on an article using the wet wiper.

Thus, an object of the invention is to provide an antibacterial composition that can form an antibacterial film having uniform antibacterial properties within the plane (hereinafter, also described as "has the effect of the invention"). Another object of the invention is to provide an antibacterial film and a wet wiper.

The inventors of the present invention conducted a thorough investigation in order to solve the problems described above. As a result, the inventors found that the problems can be solved by an antibacterial composition comprising antibacterial agent particles containing a metal; and at least one selected from the group consisting of a silicate-based compound and a thermoplastic resin having a minimum film-forming temperature of 0°C to 35°C, wherein the antibacterial agent particles containing a metal have the maximum value of frequency at a particle size of 0.1 μm or greater and less than 1 μm in a volume-based particle size distribution, and the content of particles having a particle size of 1 μm or greater is 5% to 50%. Thus, the inventors completed the invention.

That is, the inventors found that the objects can be achieved by the following configurations.

[1] An antibacterial composition, comprising antibacterial agent particles containing a metal; and at least one selected from the group consisting of a silicate-based compound and a thermoplastic resin having a minimum film-forming temperature of 0°C to 35°C, wherein the antibacterial agent particles containing a metal have the maximum value of frequency at a particle size of 0.1 μm or greater and less than 1 μm in a volume-based particle size distribution, and the content of particles having a particle size of 1 μm or greater is 5% to 50% by volume.

[2] The antibacterial composition according to [1], wherein the content of particles having a particle size of 1 μm or greater is 5% to 15% by volume.

[3] The antibacterial composition according to [1] or [2], wherein the antibacterial agent particles containing a metal further have a local maximum value of frequency at a particle size of 1 μm or greater in the particle size distribution.

[4] The antibacterial composition according to any one of [1] to [3], wherein the antibacterial agent particles containing a metal contain at least one metal selected from the group consisting of silver, copper, and zinc.

[5] The antibacterial composition according to any one of [1] to [4], further comprising a solvent.

[6] The antibacterial composition according to [5], wherein the solvent includes at least one selected from the group consisting of water and an alcohol-based solvent.

[7] The antibacterial composition according to any one of [1] to [6], wherein each of the antibacterial agent particles containing a metal is a metal-supported carrier including a carrier and a metal supported on the carrier.

[8] The antibacterial composition according to [7], wherein the carrier is an inorganic compound.

[9] An antibacterial film, comprising antibacterial agent particles containing a metal; and at least one selected from the group consisting of a silicate-based compound and a thermoplastic resin having a minimum film-forming temperature of 0°C to 35°C, the antibacterial film having an average film thickness of 0.05 to 1 μm, wherein the antibacterial agent particles containing a metal have the maximum value of frequency at a particle size of 0.1 μm or greater and less than 1 μm in a volume-based particle size distribution, the content of particles having a particle size of 1 μm or greater is 5% to 50% by volume, and the maximum value of the film thickness is 0.5 to 3 μm.

[10] An antibacterial film, comprising antibacterial agent particles containing a metal; and at least one selected from the group consisting of a silicate-based compound and a thermoplastic resin having a minimum film-forming temperature of 0°C to 35°C, the antibacterial film having an average film thickness of 0.05 to 1 μm, wherein the antibacterial agent particles containing a metal have the maximum value of frequency at a particle size of 0.1 μm or greater and less than 1 μm in a volume-based particle size distribution, the content of particles having a particle size of 1 μm or greater is 5% to 50% by volume, and the difference between the maximum value and the minimum value of the film thickness is 0.1 μm or greater.

[11] The antibacterial film according to [9] or [10], wherein the content of particles having a particle size of 1 μm or greater is 5% to 15% by volume.

[12] The antibacterial film according to any one of [9] to [11], wherein the antibacterial agent particles containing a metal further have a local maximum value of frequency at a particle size of 1 μm or greater in the particle size distribution.

[13] The antibacterial film according to any one of [9] to [12], wherein each of the antibacterial agent particles containing a metal is a metal-supported carrier including a carrier and a metal supported on the carrier.

[14] The antibacterial film according to [13], wherein the carrier is an inorganic compound.

[15] A wet wiper, comprising a base cloth impregnated with the antibacterial composition according to any one of [1] to [8].

According to the invention, an antibacterial composition that can form an antibacterial film having uniform antibacterial properties within the plane can be provided. Furthermore, according to the invention, an antibacterial film having uniform antibacterial properties within the plane, and a wet wiper capable of forming such an antibacterial film can be provided.

## BRIEF DESCRIPTION OF THE DRAWINGS

Fig. 1 is a schematic diagram showing a volume-based particle size distribution (frequency distribution) measured by a laser diffraction method.

## DESCRIPTION OF THE PREFERRED EMBODIMENTS

In the following description, the invention will be explained in detail.

The explanation on the configuration requirements described below is based on representative embodiments of the invention; however, the invention is not intended to be limited to such embodiments.

According to the present specification, a value range represented using the symbol "~" means a range including the values described before and after the symbol "~" as the lower limit and the upper limit.

According to the present specification, the term "(meth)acryl" means both or either one of acryl and methacryl.

[Antibacterial composition]

An antibacterial composition according to a first embodiment of the invention comprises antibacterial agent particles containing a metal; and at least one selected from the group consisting of a silicate-based compound and a thermoplastic resin having a minimum film-forming temperature of 0°C to 35°C. The antibacterial agent particles containing a metal have the maximum value of frequency at a particle size of 0.1 μm or greater and less than 1 μm in a volume-based particle size distribution, and the content of particles having a particle size of 1 μm or greater is 5% to 50%.

An antibacterial film formed using the above-described antibacterial composition having such a configuration has uniform antibacterial properties within the plane. This is not clearly understood in detail; however, the inventors of the present invention speculate the reason as follows.

An antibacterial film formed using the above-described antibacterial composition includes antibacterial agent particles containing a metal. At the surface of the antibacterial film, metal ions are generated from the antibacterial agent particles, and these metal ions act on bacteria. At this time, the metal ions are easily generated in antibacterial agent particles that are exposed at the surface of the antibacterial film; however, the metal ions are not easily generated in antibacterial agent particles that are buried in the antibacterial film. Therefore, the antibacterial agent particles buried in the antibacterial film are not likely to contribute to the antibacterial properties of the antibacterial film surface.

At the time of forming an antibacterial film by applying an antibacterial composition on an article to form a

coating film, and drying and/or curing the coating film, in a case in which the shape of the article is complicated (for example, the article has concavities and convexities, or the like), the film thickness of the antibacterial film to be formed may become locally non-uniform.

The inventors of the present invention found that in a case in which the film thickness of an antibacterial film becomes locally non-uniform, since antibacterial agent particles are likely to be buried into the antibacterial film at thick portions, an antibacterial film having uniform antibacterial properties within the plane cannot be obtained.

The film thickness of the antibacterial film is likely to be particularly non-uniform in a case in which an on-demand antibacterial treatment is carried out. According to the present specification, an on-demand antibacterial treatment means a treatment of forming an antibacterial film on an article by, for example, impregnating a nonwoven fabric or the like (base cloth) with an antibacterial composition and then coating an article with the antibacterial composition using this nonwoven fabric by means of wipe-and-spread wiping; and coating by hand-spraying of spraying an antibacterial composition on an article using a hand sprayer. Examples of the article mentioned above include facilities such as electronic instruments and medical instruments; and construction materials such as flooring, walls, and banisters. The facilities and the like mentioned above may have already been installed and may have already been operated.

In a case in which the on-demand antibacterial treatment is applied to an article having a complicated shape (for example, having concavities and convexities), the film thickness of the antibacterial film is more likely to become non-uniform.

In the antibacterial film, a portion having a large film thickness, the antibacterial agent particles are not likely to be exposed at the antibacterial film surface. Therefore, it is speculated that an antibacterial film having uniform antibacterial properties within the plane may not be obtained.

One of the features of the antibacterial composition of the invention is that the antibacterial agent particles have the maximum value of frequency at a particle size of 0.1 μm or greater and less than 1 μm in a volume-based particle size distribution, and the content of particles having a particle size of 1 μm or greater is 5% to 50% by volume.

It is speculated that by using such an antibacterial composition, even in a case in which the film thickness of the antibacterial film becomes locally non-uniform, the antibacterial agent particles are easily exposed at the surface of the antibacterial film, and therefore, an antibacterial film having uniform antibacterial film having uniform antibacterial properties within the plane can be obtained. In the following description, various components included in the antibacterial composition will be described in detail.

[Antibacterial agent particles containing metal]

There are no particular limitations on the antibacterial agent particles containing a metal, and any known antibacterial agent particles can be used. Regarding the antibacterial agent particles, particles exhibiting a disinfecting effect against pathogenic bacteria represented by *Staphylococcus aureus* and/or *Escherichia coli* are suitably used.

Examples of the metal include silver, mercury, zinc, iron, lead, bismuth, titanium, tin, and nickel. The form of the metal included in the antibacterial agent particles is not particularly limited, and examples include forms such as a metal particle, a metal ion, and a metal salt (including a metal complex).

Among them, from the viewpoint that the antibacterial film acquires superior antibacterial properties, the metal is preferably copper, zinc, or silver, and from the viewpoint of being highly safe and having a broad antibacterial spectrum, silver is more preferred. Furthermore, the metal is preferably a metal salt. The antibacterial agent particles containing a metal may be used singly, or two or more kinds thereof may be used in combination. Antibacterial agent particles containing silver and at least one selected from the group consisting of copper and zinc have superior light resistance, and antibacterial agent particles containing copper and/or zinc have superior antifungal properties and/or antialgae properties.

<Carrier>

Regarding the antibacterial agent particles containing a metal, a metal-supported carrier including a carrier and the above-mentioned metal supported on the carrier is preferred. The type of the carrier is not particularly limited, and any known carrier can be used. However, above all, an inorganic compound is preferred. Examples of the inorganic compound include silicates such as zeolites (crystalline aluminosilicates), silica gel, and clay minerals; glasses (including water-soluble glasses); and phosphates such as zirconium phosphate and calcium phosphate. Among them, a zeolite, glass (including water-soluble glass), or a phosphate is preferred. Above all, in a case in which glass as a simple substance is used, it is more preferable from the viewpoint that the adhesiveness between the silicate-based compound that will be described below and the carrier is enhanced, and from the viewpoint that the haze of the antibacterial film obtainable using the antibacterial composition is reduced (having excellent transparency).

The antibacterial agent particles containing a metal are preferably silver-based antibacterial agent particles.

The silver-based antibacterial agent particles mean antibacterial agent particles containing silver. Examples

include silver salts such as silver nitrate, silver chloride, silver sulfate, silver lactate, and silver acetate; silver complexes such as a silver-ammonia complex, a silver-chloro complex, and a silver-thiosulfate complex; silver particles; and silver-supported carriers having the foregoing silver compounds supported on the above-mentioned carriers. Among them, silver-supported glass that uses glass (including a water-soluble glass) as a carrier is preferred.

<Particle size>

The antibacterial agent particles containing a metal have the maximum value of frequency at a particle size of 0.1 μm or greater and less than 1 μm in a volume-based particle size distribution, and the content of particles having a particle size of 1 μm or greater is 5% to 50% by volume.

The volume-based particle size distribution according to the present specification means a volume-based particle size distribution measured by a laser diffraction method. The volume-based particle size distribution measured by a laser diffraction method means a volume-based particle size distribution measured by a test according to JIS (Japanese Industrial Standards) K 8825:2013 "Particle size analysis - laser diffraction/scattering method". For example, the volume-based particle size distribution can be measured using a laser diffraction scattering type particle size distribution analyzer (LA-350, manufactured by Horiba, Ltd.). With reference to FIG. 1 schematically illustrating the volume-based particle size distribution measured by the above-described measurement method, the particle size distribution of the antibacterial agent particles containing a metal will be described in detail.

FIG. 1 shows a schematic diagram of a volume-based particle size distribution (frequency distribution) measured by a laser diffraction method. A particle size distribution 110 is presented by frequency (%) on the axis of ordinate against particle size (μm) on the axis of abscissa. Here, the aforementioned antibacterial agent particles containing a metal have the maximum value of frequency at a particle size of 0.1 μm or greater and less than 1 μm.

According to the present specification, the particle size 101 at the time of having the maximum value of frequency is designated as mode diameter (μm).

The antibacterial agent particles are such that in the particle size distribution 110, the content of particles having a particle size of 1 μm or greater is 5% to 50% by volume.

It is more preferable for the antibacterial composition that the content of particles having a particle size of 1 μm or greater is 5% to 15% by volume.

It is preferable that the antibacterial agent particles further have a local maximum value of frequency at a particle size of 1 μm or greater in the particle size distribution 110.

Here, according to the present specification, in a case in which the antibacterial agent particles further have a local maximum value of frequency in addition to the maximum value of frequency in a volume-based particle size distribution as described above, it is said that the "antibacterial agent particles have bimodality". In a case in which the antibacterial agent particles have a plurality of local maxima of frequency in the particle size distribution, it is said that the "antibacterial agent particles have multimodality".

The maximum value of the particle size 102 on the occasion in which the frequency has a local maximum value (hereinafter, also called "local maximum value frequency particle size") is not particularly limited; however, generally, the maximum value is generally 10 μm or less. Above all, in a case in which the local maximum value frequency particle size 102 is 2 μm or less, an antibacterial composition showing a superior effect of the invention is obtained, and an antibacterial film formed using the antibacterial composition has a lower haze. In other words, the antibacterial film has superior transparency. The antibacterial agent particles may have a plurality of local maxima of frequency at a particle size of 1 μm or greater.

Here, the particle size in a case in which the frequency has a local maximum value implies a particle size $X_{LM}$ at which the frequency has a local maximum value in a predetermined particle size range. A local maximum value means a relation by which, when the frequency (%) at the particle size X is defined as F(X), the following Formula (1) is established for the frequency $F(X_M)$ at a mode diameter of $X_M$.

$$\text{Formula (1):}\quad F(X_M) > F(X_{LM})$$

The local maximum value frequency particle size can be determined from the volume-based particle size distribution measured by a laser diffraction method.

The method for producing antibacterial agent particles having such a particle size distribution is not particularly limited, and the antibacterial agent particles can be produced by any known method. Examples include a method of controlling the pulverization conditions for coarse particles so as to obtain a desired particle size distribution, a method of adjusting the particle size distribution by sieving, and a method of blending particles having different particle size distributions.

A bimodal or multimodal particle size distribution is more preferred because the antibacterial agent particles can be easily produced by blending particles having two or more kinds of particle size distributions without employing complicated pulverization conditions and/or performing an adjustment operation by sieving.

The content of the metal in the antibacterial agent particles is not particularly limited; however, for example, in a case in which the antibacterial agent particles are metal-supported carriers, the content of the metal is preferably 0.1% to 30% by mass, and more preferably 0.03% to 10% by mass, with respect to the total mass of the metal-supported carriers.

The content of the antibacterial agent particles in the antibacterial composition is not particularly limited. Above all, from the viewpoint that the antibacterial film formed from the antibacterial composition has excellent mechanical strength, from the viewpoint that the antibacterial film exhibits superior effects of the invention, and from the viewpoint that the antibacterial agent particles in the antibacterial composition are not likely to settle down, the content of the antibacterial agent particles is preferably 1% by mass or less, more preferably 0.2% by mass or less, and even more preferably 0.1% by mass or less, with respect to the total mass of the antibacterial composition. The lower limit is preferably 0.001% by mass or more, and more preferably 0.008% by mass or more, from the viewpoint that the antibacterial film formed using the antibacterial composition has superior antibacterial properties.

In a case in which two or more kinds of antibacterial agent particles containing a metal are used in combination, it is preferable that the sum of those contents is in the range described above.

[Silicate-based compound]

According to the present specification, a silicate-based compound is a compound selected from the group consisting of a compound in which a hydrolysable group is bonded to a silicon atom, a hydrolysate thereof, and a hydrolysis-condensation product thereof, and for example, at least one selected from the group consisting of a compound represented by the following Formula (3), a hydrolysate thereof, and a hydrolysis-condensation product thereof may be sed.

Formula (3) : $Si\text{-}(OR)_4$

In Formula (3) described above, R represents an alkyl group having 1 to 4 carbon atoms, and R's may be identical or different.

An antibacterial film obtainable using an antibacterial composition containing the silicate-based compound has higher hardness and has a lower water contact angle at the antibacterial film surface. Such an antibacterial film is more preferred from the viewpoints of abrasion resistance and antifouling properties.

Examples of the compound represented by Formula (3) described above include tetramethyl silicate, tetraethyl silicate, tetra-n-propyl silicate, tetra-i-propyl silicate, tetra-n-butyl silicate, tetra-i-butyl silicate, tetra-t-butyl silicate, methyl ethyl silicate, methyl propyl silicate, methyl butyl silicate, ethyl propyl silicate, and propyl butyl silicate. The silicate-based compounds may be used singly, or two or more kinds thereof may be used in combination.

A hydrolysate of a compound represented by Formula (3) means a compound obtainable by hydrolyzing OR groups in the compound represented by Formula (3). The hydrolysate may be a product in which all of the OR groups have been hydrolyzed (complete hydrolysate), or may be a product in which a portion of the OR groups have been hydrolyzed (partial hydrolysate). That is, the hydrolysate may be a complete hydrolysate, a partial hydrolysate, or a mixture thereof.

A hydrolysis-condensation product of a compound represented by Formula (3) means a compound obtainable by hydrolyzing OR groups in the compound represented by Formula (3) and condensing a hydrolysate thus obtained. The hydrolysis-condensation product may be a product in which all of the OR groups have been hydrolyzed and the hydrolysate has been completely condensed (complete hydrolysis-condensation product), or may be a product in which a portion of the OR groups have been hydrolyzed and a portion of the hydrolysate has been condensed (partial hydrolysis-condensation product). That is, the hydrolysis-condensation product may be a complete hydrolysis-condensation product, a partial hydrolysis-condensation product, or a mixture thereof.

The degree of condensation of the hydrolysis-condensation product is preferably 1 to 100, more preferably 1 to 20, and even more preferably 3 to 15.

A suitable embodiment of the silicate-based compound may be a compound represented by Formula (X).

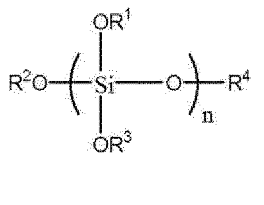 (X)

In Formula (X), $R^1$ to $R^4$ each independently represent an alkyl group having 1 to 4 carbon atoms; and n represents an integer from 2 to 100. n is preferably 3 to 15, and more preferably 5 to 10.
Examples of commercially available product of the silicate-based compound include "ETHYL SILICATE 48" manufactured by Colcoat Co., Ltd., and "MKC SILICATE MS51" manufactured by Mitsubishi Chemical Corporation.
The content of the silicate compound included in the antibacterial composition is not particularly limited; however, the content is preferably 3% to 99.9% by mass, more preferably 5% to 80% by mass, and even more preferably 10% to 70% by mass, with respect to the mass of the total solid content of the antibacterial composition.
The silicate-based compounds may be used singly, or two or more kinds thereof may be used in combination. In a case in which two or more kinds are used in combination, it is preferable that the sum of those contents is within the range described above.

[Thermoplastic resin]

According to the present specification, the thermoplastic resin has a minimum film-forming temperature of 0°C to 35°C. From the viewpoint that an antibacterial film can be formed at a lower temperature using an antibacterial composition, the minimum film-forming temperature is preferably 30°C or lower, and more preferably 20°C or lower. According to the present specification, the minimum film-forming temperature (MFT: Minimum Film-forming Temperature) means the lowest temperature at which a transparent film is formed in a case where an aqueous dispersion of particles of a thermoplastic resin having a solid content concentration of 25% is applied on a base material, and then the coating film is heated and dried.
The thermoplastic resin is not particularly limited as long as the minimum film-forming temperature is 0°C to 35°C, and any known thermoplastic resin can be used. Examples include a polyurethane resin, a polyester resin, a (meth)acrylic resin, a polystyrene resin, a fluorine resin, a polyimide resin, a fluorinated polyimide resin, a polyamide resin, a polyamideimide resin, a polyetherimide resin, a cellulose acylate resin, a polyether ether ketone resin, a polycarbonate resin, an alicyclic polyolefin resin, a polyallylate resin, a polyethersulfone resin, a polysulfone resin, a resin formed from a cycloolefin copolymer, a fluorene ring-modified polycarbonate resin, an alicyclic-modified polycarbonate resin, and a fluorene ring-modified polyester resin. Among them, a (meth)acrylic resin or a polyurethane resin is preferred.
The content of the thermoplastic resin included in the antibacterial composition is not particularly limited; however, the content is preferably 3% to 99.9% by mass, more preferably 5% to 80% by mass, and even more preferably 10% to 70% by mass, with respect to the mass of the total solid content of the antibacterial composition.
The thermoplastic resins may be used singly, or two or more kinds thereof may be used in combination. In a case in which two or more kinds are used in combination, it is preferable that the sum of those contents is within the range described above.

[Other components]

The antibacterial composition may include components other than those described above, as long as the antibacterial composition provides the effects of the invention. Examples of the other components include an antibacterial agent that does not contain a metal, a photocatalytic material, inorganic microparticles, a surfactant, a catalyst, a dispersant, a solvent, an ultraviolet absorber, a filler, an aging inhibitor, an antistatic agent, a flame retardant, a tackifier, a dispersant, an oxidation inhibitor, an antifoaming agent, a leveling agent, a matting agent, a photostabilizer, a dye, and a pigment.

<Antibacterial agent that does not contain metal>

The antibacterial composition may include an antibacterial agent that does not contain a metal. Examples of the antibacterial agent that does not contain a metal include organic antibacterial agents such as a phenol ether derivative, an imidazole derivative, a sulfone derivative, an N-haloalkylthio compound, an anilide derivative, a pyrrole derivative, a quaternary ammonium salt, a pyridine-based compound, a triazine-based compound, a benzisothiazoline-based compound, and an isothiazoline-based compound.
The organic antibacterial agents also include natural antibacterial agents. Examples of the natural antibacterial agents include chitosan, which is a basic polysaccharide obtainable by hydrolyzing chitin included in the carapace of crabs or shrimps. The antibacterial agents that do not contain a metal may be used singly, or two or more kinds thereof may be used in combination.
The mass of the antibacterial agent that does not contain a metal is preferably 50% by mass or less, and more preferably 20% by mass or less, with respect to the total amount of the antibacterial agent.

<Photocatalytic material>

The antibacterial composition may include a photocatalytic material containing a metal oxide. In a case in which the photocatalytic material has antibacterial properties, the photocatalytic material may also be used as the antibacterial agent particles mentioned above.

The type of the metal oxide that is included in the photocatalytic material is not particularly limited; however, examples include layer-like oxides having at least one element selected from Ti, Nb, Ta, or V, such as $TiO_2$, ZnO, $SrTiO_3$, CdS, GaP, InP, GaAs, $BaTiO_3$, $BaTiO_4$, $BaTi_4O_9$, $K_2NbO_3$, $Nb_2O_5$, $Fe_2O_3$, $Ta_2O_5$, $K_3Ta_3Si_2O_3$, $WO_3$, $SnO_2$, $Bi_2O_3$, $BiVO_4$, NiO, $Cu_20$, SiC, $MoS_2$, InPb, $RuO_2$, $CeO_2$, and $Ta_3N_5$. Among them, it is preferable that the metal oxide contains at least one metal atom selected from the group consisting of Zn, Ti, Ni, W, Cu, Sn, Fe, Sr, and Bi.

The metal oxide included in the photocatalytic material is preferably $TiO_2$ or $WO_3$.

The average particle size of the photocatalytic material (excluding those photocatalytic materials used as antibacterial agent particles containing a metal) is not particularly limited; however, the average particle size is preferably 1 nm to 2 μm, more preferably 10 nm to 1.5 μm, and even more preferably 20 nm to 1 μm.

The mass ratio of the mass of the antibacterial agent particles containing a metal with respect to the mass of the photocatalytic material (mass of antibacterial agent particles containing metal / mass of photocatalytic material) is preferably 0.01 to 20, more preferably 0.1 to 10, and even more preferably 0.3 to 3.

<Inorganic microparticles>

The antibacterial composition may include inorganic microparticles. The inorganic microparticles according to the present specification mean inorganic microparticles that are not included in any of the antibacterial agent particles containing a metal and the photocatalytic material.

The content of the inorganic microparticles is preferably 0.1 to 95 parts by mass, more preferably 10 to 90 parts by mass, and even more preferably 20 to 80 parts by mass, with respect to 100 parts by mass of the total solid content of the antibacterial composition. In a case in which the content of the inorganic microparticles is within the range described above, an antibacterial film formed using the antibacterial composition acquires superior mechanical strength.

Examples of the inorganic microparticles include insulating metal oxide microparticles. Specific examples include oxides containing at least one selected from the group consisting of silica and zirconia. Particularly, from the viewpoint of having excellent interactivity between the inorganic microparticles and the silicate-based compound, silica microparticles are more preferred.

Examples of the silica microparticles include silica in the form of a dry powder produced by combustion of silicon tetrachloride, and colloidal silica obtained by dispersing silicon dioxide or a hydrate thereof in water. Examples of commercially available products include SNOWTEX series manufactured by Nissan Chemical Industries, Ltd., such as SNOWTEX O-33.

The average volume particle size of the colloidal silica is not particularly limited; however, the average volume particle size is generally 3 nm to 50 nm, preferably 4 nm to 50 nm, more preferably 4 nm to 40 nm, and even more preferably 5 nm to 35 nm. The average volume particle size means the average volume particle size that can be measured by a method similar to the method for measuring the average volume particle size of the antibacterial agent particles.

<Surfactant>

The antibacterial composition may include a surfactant. Surfactants have an action of enhancing coatability of the antibacterial composition, and/or an action of enhancing smoothness of the antibacterial film to be formed. Surfactants also have an action of adjusting the water contact angle at the surface of the antibacterial film to be formed, to desired value.

The surfactant is not particularly limited, and examples include a nonionic surfactant, an anionic surfactant, a cationic surfactant, and an amphoteric surfactant.

The content of the surfactant is preferably 0.01 parts by mass or more with respect to 100 parts by mass of the total solid content of the antibacterial composition. The upper limit of the content of the surfactant is not particularly limited; however, generally, the content is preferably 10 parts by mass or less, more preferably 8 parts by mass or less, even more preferably 5 parts by mass or less, and particularly preferably less than 4 parts by mass, with respect to 100 parts by mass of the total solid content of the antibacterial composition.

The surfactants may be used singly, or two or more kinds thereof may be used in combination. In a case in which two or more kinds are used in combination, it is preferable that the content sum of those surfactants is within the range described above.

Examples of the nonionic surfactant include polyethylene glycol monolauryl ether, polyethylene glycol monostearyl ether, polyethylene glycol monocetyl ether, polyethylene glycol monolauryl ester, and polyethylene glycol monostearyl ester.

Examples of the ionic surfactant include anionic surfactants such as an alkylsulfuric acid salt, an alkylbenzenesulfonic acid salt, and an alkylphosphoric acid salt; cationic surfactants such as an alkyltrimethylammonium salt, and a dialkyldimethylammonium salt; and amphoteric surfactants such as an alkylcarboxybetaine.

<Catalyst>

The antibacterial composition may include a catalyst that accelerates condensation of a silicate-based compound (hereinafter, also referred to as "reaction catalyst"). As the antibacterial composition includes a catalyst, an antibacterial film having superior mechanical strength can be formed, and/or the formation of an antibacterial film can be carried out more rapidly.

The catalyst is not particularly limited; however, examples include an acid catalyst, an alkali catalyst, and an organometallic catalyst.

Examples of the acid catalyst include nitric acid, hydrochloric acid, sulfuric acid, acetic acid, chloroacetic acid, formic acid, oxalic acid, and toluenesulfonic acid.

Examples of the alkali catalyst include sodium hydroxide, potassium hydroxide, and tetramethylammonium hydroxide.

Examples of the organometallic catalyst include aluminum chelate compounds such as aluminum bis(ethylacetoacetate) mono(acetylacetonate), aluminum tris(acetylacetonate), and aluminum ethyl acetoacetate diisopropylate; zirconium chelate compounds such as zirconium tetrakis(acetylacetonate) and zirconium bis(butoxy)bis(acetylacetonate); titanium chelate compounds such as titanium tetrakis(acetylacetonate) and titanium bis(butoxy)bis(acetylacetonate); and organotin compounds such as dibutyltin diacetate, dibutyltin laurate, and dibutyltin dioctoate.

The type of the catalyst is not particularly limited; however, organometallic catalysts are preferred, and among them, an aluminum chelate compound or a zirconium chelate compound is more preferred, and an aluminum chelate compound is even more preferred.

The content of the catalyst is preferably 0.1 to 20 parts by mass, more preferably 0.2 to 15 parts by mass, and even more preferably 0.3 to 10 parts by mass, with respect to 100 parts by mass of the total solid content of the antibacterial composition.

<Dispersant>

The antibacterial composition may include a dispersant. A dispersant has a function of enhancing dispersibility of the antibacterial agent particles containing a metal.

The dispersant is not particularly limited, and any known dispersant can be used. Above all, a dispersant having an acidic group is preferred. Examples of the acidic group include a carboxyl group, a sulfonic acid group, and a phosphoric acid group. Examples of commercially available products of the dispersant include DISPERBYK-102, DISPERBYK-110, DISPERBYK-111, DISPERBYK-112, DISPERBYK-180 (all manufactured by BYK Chemie GmbH), SOLSPERSE 26000, SOLSPERSE 36000, and SOLSPERSE 41000 (all manufactured by Lubrizol Corporation).

The content of the dispersant is not particularly limited; however, the content is preferably 200 parts by mass or more, and more preferably 400 parts by mass or more, with respect to 100 parts by mass of the antibacterial agent particles. The upper limit is not particularly limited; however, the upper limit is generally 1,500 parts by mass or less.

The dispersants may be used singly, or two or more kinds thereof may be used in combination. In a case in which two or more kinds are used in combination, the content sum of those contents is preferably within the range described above.

<Solvent>

It is preferable that the antibacterial composition includes a solvent. The solvent is not particularly limited, and examples include water and/or an organic solvent. Examples of the organic solvent include alcohol-based solvents such as methanol, ethanol, n-propanol, isopropanol, n-butanol, isobutanol, sec-butanol, tert-butanol, n-pentanol, and isopentanol; glycol ether-based solvents such as methyl cellosolve, ethyl cellosolve, ethylene glycol dimethyl ether, ethylene glycol diethyl ether, propylene glycol monomethyl ether, propylene glycol monoethyl ether, propylene glycol monopropyl ether, propylene glycol dimethyl ether, and propylene glycol diethyl ether; aromatic hydrocarbon-based solvents such as benzene, toluene, xylene, and ethylbenzene; alicyclic hydrocarbon-based solvents such as cyclopentane, cyclohexane, methylcyclohexane, and ethylcyclohexane; ether-based solvents such as tetrahydrofuran, dioxane, diisopropyl ether, and di-n-butyl ether; ketone-based solvents such as acetone, methyl ethyl ketone, and methyl isobutyl ketone; and ester-based solvents such as methyl acetate, ethyl acetate, n-propyl acetate, isopropyl acetate, n-butyl acetate, isobutyl acetate, n-amyl acetate, isoamyl acetate, hexyl acetate, methyl propionate, and butyl propionate. The solvents may be used singly, or two or more kinds thereof may be used in combination.

Among them, from the viewpoint that an antibacterial film having a more uniform film thickness is likely to be obtained, it is preferable that the solvent includes at least one selected from the group consisting of water and an alcohol-based solvent; it is more preferable that the solvent includes at least one selected from the group consisting of water, methanol, ethanol, n-propanol, isopropanol, and butanol; and it is even more preferable that the solvent includes water and ethanol.

The mass ratio of an alcohol-based solvent to water in a case in which the solvent includes water and an alcohol-based solvent is preferably that the ratio of alcohol-based solvent/water is 40/60 to 99/1. In a case in which the mass ratio is in this range, an antibacterial composition having superior bactericidal properties and fast dryability is obtained.

The solid content of the antibacterial composition is not particularly limited; however, from the viewpoint that the antibacterial composition has superior coatability, the solid content is preferably 1% to 20% by mass, and more preferably 5% to 10% by mass.

[Method for producing antibacterial composition]

The antibacterial composition can be produced by mixing the various components described above. The order of mixing of the components is not particularly limited; however, in a case in which the antibacterial composition includes a dispersant, the antibacterial agent particles containing a metal and a dispersant are mixed first, and thereby the antibacterial agent particles containing a metal may be dispersed in the dispersant. In a case in which the antibacterial composition includes antibacterial agent particles that do not contain a metal, a photocatalytic material, and/or inorganic microparticles, these may also be dispersed in the dispersant.

In a case in which the antibacterial composition includes a silicate compound and a solvent including water, the silicate compound and the solvent including water are mixed prior to other components, thereby a hydrolysate of the silicate-based compound is formed, and thus a hydrolysate solution of the silicate-based compound may be produced. At this time, the aforementioned catalyst may be added thereto. Next, a surfactant, inorganic microparticles, and a dispersant may be added to the hydrolysate solution of the silicate-based compound thus obtained, as necessary. Subsequently, an antibacterial composition can be produced by adding antibacterial agent particles containing a metal thereto.

The production conditions for the antibacterial composition are not particularly limited. In a case in which inorganic microparticles are used, the inorganic microparticles may aggregate depending on the pH of the antibacterial composition and/or the concentration of co-existing components. In this case, the inorganic microparticles are dispersed in advance in a solvent, and thus an inorganic microparticle dispersion is produced. As this inorganic microparticle dispersion is added to an antibacterial composition during production thereof, the aggregation state can be regulated. At this time, by adjusting the pH of the two to the same value or to values close to each other, aggregation of the inorganic microparticles can be prevented.

[Use of antibacterial composition]

An antibacterial film can be formed using the antibacterial composition. The antibacterial composition produced as described above can give an antibacterial film in which, even in a case where the film thickness of the antibacterial film becomes locally non-uniform, the antibacterial agent particles are easily exposed at the surface of the antibacterial film, and the antibacterial properties are uniform within the plane. The antibacterial composition can be preferably used particularly for an on-demand treatment.

[Antibacterial film]

An antibacterial film according to a second embodiment of the invention comprises antibacterial agent particles containing a metal; and at least one selected from the group consisting of a silicate-basedcompound and a thermoplastic resin having a minimum film-forming temperature of 0°C to 35°C, the antibacterial film having an average film thickness of 0.05 to 1 μm, in which the antibacterial agent particles containing a metal have the maximum value of frequency at a particle size of 0.1 μm or greater and less than 1 μm in a volume-based particle size distribution, and the content of particles having a particle size of 1 μm or greater is 5% to 50% by volume. Hereinafter, the configuration of the antibacterial film will be described in detail.

[Antibacterial agent particles containing metal]

The antibacterial film includes antibacterial agent particles containing a metal. The antibacterial agent particles containing a metal have a maximum value of frequency at a particle size of 0.1 μm or greater and less than 1 μm in a

volume-based particle size distribution, and the content of particles having a particle size of 1 μm or greater is 5% to 50% by volume. Embodiments thereof are as described above in connection with the antibacterial composition described above.

[Silicate-based compound]

In a case in which a silicate-based compound is included in the antibacterial film, embodiments of the silicate-based compound are as described above in connection with the aforementioned antibacterial composition. The content of the silicate-based compound in the antibacterial film is not particularly limited; however, the content is preferably 3% to 99.9% by mass, more preferably 5% to 80% by mass, and even more preferably 10% to 70% by mass, with respect to the total mass of the antibacterial film. The total mass of the antibacterial film may be equivalent to the total solid content of the antibacterial composition described above.

[Thermoplastic resin]

In a case in which the antibacterial film includes a thermoplastic resin having a minimum film-forming temperature of 0°C to 35°C, the embodiments of the thermoplastic resin are as described above in connection of the aforementioned antibacterial composition. The content of the thermoplastic resin in the antibacterial film is not particularly limited; however, the content is preferably 3% to 99.9% by mass, more preferably 5% to 80% by mass, and even more preferably 10% to 70% by mass, with respect to the total mass of the antibacterial film.

<Average film thickness of antibacterial film>

The average film thickness of the antibacterial film is 0.05 to 1 μm. In a case in which the average film thickness of the antibacterial film is smaller than the lower limit, the antibacterial film has inferior mechanical strength. On the other hand, in a case in which the average film thickness of the antibacterial film is larger than the upper limit, the antibacterial film has inferior antibacterial properties.

The average film thickness of the antibacterial film is preferably 0.5 μm or less, and more preferably 0.3 μm or less.

The average film thickness of the antibacterial film according to the present specification means the film thickness measured for an arbitrary area which measures 3 cm on each of four sides in the antibacterial film. Specifically, the average film thickness means the average film thickness measured by the following method.

An antibacterial film is formed on a predetermined base material, a specimen is produced therefrom, and the film thickness is measured by scanning an arbitrary area that measures 3 cm on each of four sides in the antibacterial film, at a spot size of 80 μm and an interval of 2 mm using a film thickness meter that utilizes interference spectroscopy (for example, "C10323-01" manufactured by Hamamatsu Photonics K.K.). An arithmetic mean of film thicknesses measured as such is designated as the average film thickness.

<Maximum value of film thickness>

In regard to the antibacterial film according to one embodiment of the invention, the maximum value of the film thickness is 0.5 to 3 μm. In a case in which the maximum value of the film thickness is less than the lower limit, it is difficult to obtain an antibacterial film having uniform antibacterial properties within the plane. In a case in which the maximum value of the film thickness is greater than the upper limit value, the antibacterial properties at the antibacterial film surface may be inferior. The maximum value of the film thickness means the maximum value of the film thickness obtainable by a measurement method similar to the measurement method for the average film thickness described above.

<Difference between maximum value and minimum value of film thickness of antibacterial film>

In regard to the antibacterial film according to one embodiment of the invention, the difference between the maximum value and the minimum value of the film thickness is 0.1 μm or greater. The maximum value and the minimum value of the film thickness mean the maximum value and the minimum value of the film thickness obtainable by a measurement method similar to the measurement method for the average film thickness described above.

[Wet wiper]

A wet wiper according to a third embodiment of the invention includes a base cloth impregnated with an antibacterial composition. In other words, a wet wiper is obtained by impregnating a base cloth with an antibacterial

composition. By using the wet wiper, antibacterial films can be formed by applying an antibacterial composition by wiping facilities such as electronic instruments and medical instruments, and construction materials such as floorings, walls, and banisters. The wet wiper can be suitably used for an on-demand antibacterial treatment.

The wet wiper can be obtained by impregnating a base cloth with an antibacterial composition. A suitable embodiment of the antibacterial composition is as described above in connection with the aforementioned antibacterial composition.

[Base cloth]

The base cloth used for the wet wiper is not particularly limited, and a base cloth formed from a natural fiber and/or a base cloth formed from a synthetic fiber is preferred. Examples of the natural fiber include pulp, cotton, hemp, flax, wool, camel hair, cashmere, mohair, and silk. Examples of the chemical fiber include rayon, polynosic, acetate, triacetate, nylon, polyester, polyacrylonitrile, polyvinyl alcohol, polyvinyl chloride, polyvinylidene chloride, polyethylene, polypropylene, polyurethane, polyalkylene paraoxybenzoate, and polychlal.

Among them, from the viewpoint that the antibacterial composition is easily impregnated, a hydrophilic base cloth is preferred. A hydrophilic base cloth is a base cloth containing fibers containing hydrophilic groups such as a hydroxyl group, an amino group, a carboxyl group, an amide group, and a sulfonyl group, and specific examples include cotton and pulp as plant fibers; animal fibers; and rayon, nylon, polyester, polyacrylonitrile, and polyvinyl alcohol as chemical fibers.

Examples of the base cloth for the wet wiper include a nonwoven fabric, a woven fabric, a towel, a gauze, and an absorbent cotton, and among them, a nonwoven fabric is preferred.

In a case in which the wet wiper is produced, the amount of the antibacterial composition to be used to impregnate a base cloth is not particularly limited; however, generally, the amount of the antibacterial composition is preferably 100 to 5,000 parts by mass, more preferably 500 to 5,000 parts by mass, and even more preferably 1,000 to 5,000 parts by mass, with respect to 100 parts by weight of the base cloth.

EXAMPLES

The invention will be described in more detail below based on Examples. The materials, amounts of use, proportions, treatment specifications, order of treatment, and the like disclosed in the following Examples can be modified as appropriate as long as the gist of the invention is maintained. Therefore, the scope of the invention should not be restrictively construed by the Examples described below. Meanwhile, unless particularly stated otherwise, the particle size distribution is on a volume basis.

[Production of antibacterial agent particles]

Glass-based antibacterial agent particles having different particle size distributions (silver-supported glass ("BACTEKILLER BM-103A and BM-103C" manufactured by Fuji Chemical Industry Co., Ltd.), silver- and copper-supported glass ("BACTEKILLER BM-101A" manufactured by Fuji Chemical Industry Co., Ltd.), and silver- and zinc-supported glass ("BACTEKILLER BM-102A" manufactured by Fuji Chemical Industry Co., Ltd.)) were prepared, and the antibacterial agent particles were wet-pulverized using a bead mill. Zirconia beads were used for the bead mill.

In order to obtain desired particle size distributions, the wet-pulverized antibacterial agent particles were subjected to sieving. For the sieving, a sieving method of utilizing the differences in the rate of sedimentation of particles (water sieve) was used. The wet-pulverized antibacterial agent particles were separated into particle groups having various particle size distributions, and then the separated particles were blended. Thereby, the particle size distribution of the antibacterial agent particles was adjusted.

Zeolite-based antibacterial agent particles (silver-supported zeolite, "ZEOMIC" manufactured by Sinanen Zeomic Co., Ltd.) and zirconium phosphate-based antibacterial agent particles (silver-supported zirconium phosphate, "NOVALON (registered trademark) AG" manufactured by Toagosei Co., Ltd.) were also subjected to a similar operation, and thus the particle size distributions of the antibacterial agent particles were adjusted.

Volume-based particle size distributions of the antibacterial agent particles were measured using a laser diffraction scattering type particle size distribution analyzer (LA-350) manufactured by Horiba, Ltd.

[Example 1]

While 560 g of ethanol was stirred in a container, 10 g of pure water, 50 g of a silicate-based compound (manufactured by Mitsubishi Chemical Corporation, "MKC (registered trademark) SILICATE MS51", solid content about 52% by mass), 15 g of a reaction catalyst ("ALUMINUM CHELATE D" manufactured by Kawaken Fine Chemical Co.,

Ltd., diluted with ethanol; solid content concentration 1% by mass), 30 g of a nonionic surfactant ("EMALEX 715" manufactured by Nihon Emulsion Co., Ltd., diluted with pure water; solid content concentration 0.5% by mass), 10 g of an anionic surfactant (sodium di(2-ethylhexyl)sulfosuccinate, diluted with pure water; solid content concentration 0.2% by mass), 40 g of inorganic microparticles (silica particles, "SNOWTEX O-33" manufactured by Nissan Chemical Industries, Ltd., diluted with pure water; solid content concentration: 33% by mass), and 3.6 g of a dispersant ("DISPERBYK (registered trademark)-180" manufactured by BYK Chemie GmbH) were introduced in sequence into the container. Subsequently, 1.2 g of antibacterial agent particles (silver-supported glass, diluted with ethanol; solid content concentration 40% by mass) having a mode diameter of 0.4 μm and having the content of particles having a particle size of 1 μm or greater adjusted to 6% by volume, were added to the container, and the mixture was stirred for 20 minutes. Thus, antibacterial composition A-1 was obtained.

Next, as a model film for evaluating the uniformity of antibacterial properties depending on the film thickness differences in an antibacterial film, antibacterial composition A-1 was applied, using a bar coater, on a PET (polyethylene terephthalate, thickness 250 μm) base material that had been subjected to an easy adhesion treatment on one surface, the antibacterial composition being applied on the easy adhesion-treated surface of the base material, such that the average film thickness of the antibacterial film would be 0.2 μm and 0.8 μm. Such a coating film was dried at room temperature (25°C) for 20 minutes, and antibacterial film A-1-1 (average film thickness 0.2 μm) and antibacterial film A-1-2 (average film thickness 0.8 μm) were obtained (hereinafter, also referred to as "bar coating method").

Next, antibacterial composition A-1 was applied on a PET base material that had been subjected to an easy adhesion treatment on one surface, by wiping the easy adhesion-treated surface using a nonwoven fabric ("BEMCOT (registered trademark) M-3II") manufactured by Asahi Kasei Fibers Corporation that had been impregnated with antibacterial composition A-1, such that the average film thickness of the antibacterial film would be 0.3 μm. This coating film was dried at room temperature (25°C) for 20 minutes, and antibacterial film A-1-3 was obtained (hereinafter, also referred to as "wiping method"). The maximum value of the film thickness of antibacterial film A-1-3 was 0.5 μm, and the difference between the maximum value and the minimum value of the film thickness (hereinafter, also referred to as "film thickness difference") was 0.3 μm.

Furthermore, the average film thickness, the maximum value of the film thickness, and the minimum value of the film thickness of each of the antibacterial films were measured by the method described below. First, an antibacterial film formed on a PET base material was used as a specimen, and the film thickness was measured by scanning an arbitrary area that measured 3 cm on each of four sides in the antibacterial film, at a spot size of 80 μm and an interval of 2 mm using a film thickness meter that utilized interference spectroscopy (for example, "C10323-01" manufactured by Hamamatsu Photonics K.K.). An arithmetic mean of film thicknesses measured as such was designated as the average film thickness. Among the film thicknesses thus measured, the largest value was designated as the maximum value of the film thickness, and the smallest value was designated as the minimum value of the film thickness (the methods for measuring the average film thickness, the maximum value of the film thickness, and the minimum value of the film thickness are also similar to other Examples and Comparative Examples described below).

[Example 2]

Antibacterial composition A-2 was obtained in the same manner as in Example 1, except that the antibacterial agent particles were changed to antibacterial agent particles (silver-supported glass, diluted with ethanol; solid content concentration 40% by mass) having a mode diameter of 0.4 μm and having the content of particles having a particle size of 1 μm or greater adjusted to 15% by volume.

Next, antibacterial film A-2-1 (average film thickness 0.2 μm) and antibacterial film A-2-2 (average film thickness 0.8 μm) were obtained by the bar coating method, using antibacterial composition A-2.

Next, antibacterial film A-2-3 (average film thickness 0.3 μm) was obtained by the wiping method, using antibacterial composition A-2. The maximum value of film thickness of antibacterial film A-2-3 was 0.5 μm, and the film thickness difference was 0.4 μm.

[Example 3]

Antibacterial composition A-3 was obtained in the same manner as in Example 1, except that the antibacterial agent particles were changed to antibacterial agent particles (silver-supported glass, diluted with ethanol; solid content concentration 40% by mass) having a mode diameter of 0.4 μm and having the content of particles having a particle size of 1 μm or greater adjusted to 22% by volume.

Next, antibacterial film A-3-1 (average film thickness: 0.2 μm) and antibacterial film A-3-2 (average film thickness: 0.8 μm) were obtained by the bar coating method, using antibacterial composition A-3.

Next, antibacterial film A-3-3 (average film thickness: 0.3 μm) was obtained by the wiping method, using antibacterial composition A-3. The maximum value of film thickness of antibacterial film A-3-3 was 0.6 μm, and the film

thickness difference was 0.5 μm.

[Example 4]

Antibacterial composition A-4 was obtained in the same manner as in Example 1, except that the antibacterial agent particles were changed to antibacterial agent particles (silver-supported glass, diluted with ethanol; solid content concentration 40% by mass) having a mode diameter of 0.4 μm and having the content of particles having a particle size of 1 μm or greater adjusted to 34% by volume.

Next, antibacterial film A-4-1 (average film thickness: 0.2 μm) and antibacterial film A-4-2 (average film thickness: 0.8 μm) were obtained by the bar coating method, using antibacterial composition A-4.

Next, antibacterial film A-4-3 (average film thickness: 0.3 μm) was obtained by the wiping method, using antibacterial composition A-4. The maximum value of film thickness of antibacterial film A-4-3 was 0.6 μm, and the film thickness difference was 0.5 μm.

[Example 5]

Antibacterial composition A-5 was obtained in the same manner as in Example 1, except that the antibacterial agent particles were changed to antibacterial agent particles (silver-supported glass, diluted with ethanol; solid content concentration 40% by mass) having a mode diameter of 0.4 μm and having the content of particles having a particle size of 1 μm or greater adjusted to 45% by volume.

Next, antibacterial film A-5-1 (average film thickness: 0.2 μm) and antibacterial film A-5-2 (average film thickness: 0.8 μm) were obtained by the bar coating method, using antibacterial composition A-5.

Next, antibacterial film A-5-3 (average film thickness: 0.3 μm) was obtained by the wiping method, using antibacterial composition A-5. The maximum value of film thickness of antibacterial film A-5-3 was 0.6 μm, and the film thickness difference was 0.6 μm.

[Example 6]

Antibacterial composition A-6 was obtained in the same manner as in Example 1, except that the antibacterial agent particles were changed to antibacterial agent particles obtained by blending 1.08 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.12 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume.

Next, antibacterial film A-6-1 (average film thickness: 0.2 μm) and antibacterial film A-6-2 (average film thickness: 0.8 μm) were obtained by the bar coating method, using antibacterial composition A-6.

Next, antibacterial film A-6-3 (average film thickness: 0.3 μm) was obtained by the wiping method, using antibacterial composition A-6. The maximum value of film thickness of antibacterial film A-6-3 was 0.6 μm, and the film thickness difference was 0.5 μm.

The blended antibacterial agent particles had a mode diameter of 0.4 μm and a local maximum value frequency particle size of 1.9 μm. Furthermore, the content of particles having a particle size of 1 μm or greater was 9% by volume.

[Example 7]

Antibacterial composition A-7 was obtained in the same manner as in Example 1, except that the antibacterial agent particles were changed to antibacterial agent particles obtained by blending 1.02 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.18 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume.

Next, antibacterial film A-7-1 (average film thickness: 0.2 μm) and antibacterial film A-7-2 (average film thickness: 0.8 μm) were obtained by the bar coating method, using antibacterial composition A-7.

Next, antibacterial film A-7-3 (average film thickness: 0.3 μm) was obtained by the wiping method, using antibacterial composition A-7. The maximum value of film thickness of antibacterial film A-7-3 was 0.6 μm, and the film thickness difference was 0.5 μm.

The blended antibacterial agent particles had a mode diameter of 0.4 μm and a local maximum value frequency

particle size of 1.9 μm. Furthermore, the content of particles having a particle size of 1 μm or greater was 13% by volume.

[Example 8]

Antibacterial composition A-8 was obtained in the same manner as in Example 1, except that the antibacterial agent particles were changed to antibacterial agent particles obtained by blending 0.96 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.24 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume.

Next, antibacterial film A-8-1 (average film thickness: 0.2 μm) and antibacterial film A-8-2 (average film thickness: 0.8 μm) were obtained by the bar coating method, using antibacterial composition A-8.

Next, antibacterial film A-8-3 (average film thickness: 0.3 μm) was obtained by the wiping method, using antibacterial composition A-8. The maximum value of film thickness of antibacterial film A-8-3 was 0.7 μm, and the film thickness difference was 0.6 μm.

The blended antibacterial agent particles had a mode diameter of 0.4 μm and a local maximum value frequency particle size of 1.9 μm. Furthermore, the content of particles having a particle size of 1 μm or greater was 17% by volume.

[Example 9]

Antibacterial composition A-9 was obtained in the same manner as in Example 1, except that the antibacterial agent particles were changed to antibacterial agent particles obtained by blending 0.72 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.48 g of antibacterial agent particles (silver-supported glass, diluted with ethanol; solid content concentration 40% by mass) having a mode diameter of 1.9 μm and having the content of a particle size of 1 μm or greater adjusted to 86% by volume.

Next, antibacterial film A-9-1 (average film thickness: 0.2 μm) and antibacterial film A-9-2 (average film thickness: 0.8 μm) were obtained by the bar coating method, using antibacterial composition A-9.

Next, antibacterial film A-9-3 (average film thickness: 0.3 μm) was obtained by the wiping method, using antibacterial composition A-9. The maximum value of film thickness of antibacterial film A-9-3 was 0.7 μm, and the film thickness difference was 0.6 μm.

The blended antibacterial agent particles had a mode diameter of 0.4 μm and a local maximum value frequency particle size of 1.9 μm. Furthermore, the content of particles having a particle size of 1 μm or greater was 34% by volume.

[Example 10]

Antibacterial composition A-10 was obtained in the same manner as in Example 1, except that the antibacterial agent particles were changed to antibacterial agent particles obtained by blending 1.08 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.12 g of antibacterial agent particles (silver-supported glass, diluted with ethanol; solid content concentration 40% by mass) having a mode diameter of 5.2 μm and having the content of a particle size of 1 μm or greater adjusted to 92% by volume.

Next, antibacterial film A-10-1 (average film thickness: 0.2 μm) and antibacterial film A-10-2 (average film thickness: 0.8 μm) were obtained by the bar coating method, using antibacterial composition A-10.

Next, antibacterial film A-10-3 (average film thickness: 0.3 μm) was obtained by the wiping method, using antibacterial composition A-10. The maximum value of film thickness of antibacterial film A-10-3 was 0.6 μm, and the film thickness difference was 0.5 μm.

The blended antibacterial agent particles had a mode diameter of 0.4 μm and a local maximum value frequency particle size of 5.2 μm. Furthermore, the content of particles having a particle size of 1 μm or greater was 9% by volume.

[Example 11]

Antibacterial composition A-11 was obtained in the same manner as in Example 1, except that the antibacterial agent particles were changed to antibacterial agent particles obtained by blending 1.08 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, 0.08 g of antibacterial agent particles (silver-supported glass, diluted with ethanol; solid content concentration 40% by mass)

having a mode diameter of 1.9 μm and having the content of particles having a particle size of 1 μm or greater adjusted to 86% by volume, and 0.04 g of antibacterial agent particles (silver-supported glass, diluted with ethanol; solid content concentration 40% by mass) having a mode diameter of 5.2 μm and having the content of particles having a particle size of 1 μm or greater adjusted to 92% by volume.

Next, antibacterial film A-11-1 (average film thickness: 0.2 μm) and antibacterial film A-11-2 (average film thickness: 0.8 μm) were obtained by the bar coating method, using antibacterial composition A-11.

Next, antibacterial film A-11-3 (average film thickness: 0.3 μm) was obtained by the wiping method, using antibacterial composition A-11. The maximum value of film thickness of antibacterial film A-11-3 was 0.6 μm, and the film thickness difference was 0.5 μm.

The blended antibacterial agent particles had a mode diameter of 0.4 μm and a local maximum value frequency particle size of 1.9 μm and 5.2 μm. Furthermore, the content of particles having a particle size of 1 μm or greater was 9% by volume.

[Example 12]

Antibacterial composition A-12 was obtained in the same manner as in Example 1, except that the antibacterial agent particles were changed to antibacterial agent particles obtained by blending 1.08 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.12 g of antibacterial agent particles (silver- and copper-supported glass, diluted with ethanol; solid content concentration 40% by mass) having a mode diameter of 1.9 μm and having the content of particles having a particle size of 1 μm or greater adjusted to 86% by volume.

Next, antibacterial film A-12-1 (average film thickness: 0.2 μm) and antibacterial film A-12-2 (average film thickness: 0.8 μm) were obtained by the bar coating method, using antibacterial composition A-12.

Next, antibacterial film A-12-3 (average film thickness: 0.3 μm) was obtained by the wiping method, using antibacterial composition A-12. The maximum value of film thickness of antibacterial film A-12-3 was 0.7 μm, and the film thickness difference was 0.5 μm.

The blended antibacterial agent particles had a mode diameter of 0.4 μm and a local maximum value frequency particle size of 1.9 μm. Furthermore, the content of particles having a particle size of 1 μm or greater was 9% by volume.

[Example 13]

Antibacterial composition A-13 was obtained in the same manner as in Example 1, except that the antibacterial agent particles were changed to antibacterial agent particles obtained by blending 1.08 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.12 g of antibacterial agent particles (silver- and zinc-supported glass, diluted with ethanol; solid content concentration 40% by mass) having a mode diameter of 1.9 μm and having the content of particles having a particle size of 1 μm or greater adjusted to 86% by volume.

Next, antibacterial film A-13-1 (average film thickness: 0.2 μm) and antibacterial film A-13-2 (average film thickness: 0.8 μm) were obtained by the bar coating method, using antibacterial composition A-13.

Next, antibacterial film A-13-3 (average film thickness: 0.3 μm) was obtained by the wiping method, using antibacterial composition A-13. The maximum value of film thickness of antibacterial film A-13-3 was 0.7 μm, and the film thickness difference was 0.6 μm.

The blended antibacterial agent particles had a mode diameter of 0.4 μm and a local maximum value frequency particle size of 1.9 μm. Furthermore, the content of particles having a particle size of 1 μm or greater was 9% by volume.

[Example 14]

While 580 g of ethanol was stirred in a container, 45 g of a thermoplastic resin having a minimum film-forming temperature of 15°C (acrylic resin, "VONCOAT 40-418EF" manufactured by DIC Corporation, diluted with pure water; solid content concentration 55% by mass), 30 g of a nonionic surfactant ("EMALEX 715" manufactured by Nihon Emulsion Co., Ltd., diluted with pure water; solid content concentration 0.5% by mass), 10 g of an anionic surfactant (sodium di(2-ethylhexyl)sulfosuccinate, diluted with pure water; solid content concentration 0.2% by mass), 40 g of inorganic microparticles (silica particles, "SNOWTEX O-33" manufactured by Nissan Chemical Industries, Ltd., diluted with pure water; solid content concentration: 33% by mass), and 3.6 g of a dispersant ("DISPERBYK (registered trademark)-180" manufactured by BYK Chemie GmbH) were introduced in sequence into the container. Subsequently, antibacterial agent particles obtained by blending 1.08 g of antibacterial agent particles (silver-supported glass, diluted with ethanol; solid

content concentration 40% by mass) having a mode diameter of 0.4 μm and having the content of particles having a particle size of 1 μm or greater adjusted to 0% by volume, and 0.12 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume, were added to the container, and the mixture was stirred for 20 minutes. Thus, antibacterial composition A-14 was obtained.

Next, antibacterial film A-14-1 (average film thickness: 0.2 μm) and antibacterial film A-14-2 (average film thickness: 0.8 μm) were obtained by the bar coating method, using antibacterial composition A-14.

Next, antibacterial film A-14-3 (average film thickness: 0.3 μm) was obtained by the wiping method, using antibacterial composition A-14. The maximum value of film thickness of antibacterial film A-14-3 was 0.6 μm, and the film thickness difference was 0.5 μm.

The blended antibacterial agent particles had a mode diameter of 0.4 μm and a local maximum value frequency particle size of 1.9 μm. Furthermore, the content of particles having a particle size of 1 μm or greater was 9% by volume.

[Example 15]

While 580 g of ethanol was stirred in a container, 65 g of a thermoplastic resin having a minimum film-forming temperature of 28°C (urethane resin, "SUPERFLEX (registered trademark) 860" manufactured by Dai-ichi Kogyo Seiyaku Co., Ltd., diluted with pure water; solid content concentration 40% by mass), 30 g of a nonionic surfactant ("EMALEX 715" manufactured by Nihon Emulsion Co., Ltd., diluted with pure water; solid content concentration 0.5% by mass), 10 g of an anionic surfactant (sodium di(2-ethylhexyl)sulfosuccinate, diluted with pure water; solid content concentration 0.2% by mass), 40 g of inorganic microparticles (silica particles, "SNOWTEX O-33" manufactured by Nissan Chemical Industries, Ltd., diluted with pure water; solid content concentration: 33% by mass), and 3.6 g of a dispersant ("DISPERBYK (registered trademark)-180" manufactured by BYK Chemie GmbH) were introduced in sequence into the container. Subsequently, antibacterial agent particles obtained by blending 1.08 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume, and 0.12 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume, were added to the container, and the mixture was stirred for 20 minutes. Thus, antibacterial composition A-15 was obtained.

Next, antibacterial film A-15-1 (average film thickness: 0.2 μm) and antibacterial film A-15-2 (average film thickness: 0.8 μm) were obtained by the bar coating method, using antibacterial composition A-15.

Next, antibacterial film A-15-3 (average film thickness: 0.3 μm) was obtained by the wiping method, using antibacterial composition A-15. The maximum value of film thickness of antibacterial film A-15-3 was 0.5 μm, and the film thickness difference was 0.4 μm.

The blended antibacterial agent particles had a mode diameter of 0.4 μm and a local maximum value frequency particle size of 1.9 μm. Furthermore, the content of particles having a particle size of 1 μm or greater was 9% by volume.

[Example 16]

Antibacterial composition A-16 was obtained in the same manner as in Example 1, except that the antibacterial agent particles were changed to antibacterial agent particles obtained by blending 1.08 g of antibacterial agent particles (silver-supported zeolite, diluted with ethanol; solid content concentration 40% by mass) having a mode diameter of 0.6 μm and having the content of particles having a particle size of 1 μm or greater adjusted to 13% by volume, and 0.12 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume.

Next, antibacterial film A-16-1 (average film thickness: 0.2 μm) and antibacterial film A-16-2 (average film thickness: 0.8 μm) were obtained by the bar coating method, using antibacterial composition A-16.

Next, antibacterial film A-16-3 (average film thickness: 0.3 μm) was obtained by the wiping method, using antibacterial composition A-16. The maximum value of film thickness of antibacterial film A-16-3 was 0.6 μm, and the film thickness difference was 0.5 μm.

The blended antibacterial agent particles had a mode diameter of 0.6 μm and a local maximum value frequency particle size of 1.9 μm. Furthermore, the content of particles having a particle size of 1 μm or greater was 12% by volume.

[Example 17]

Antibacterial composition A-17 was obtained in the same manner as in Example 1, except that the antibacterial

agent particles were changed to antibacterial agent particles obtained by blending 1.08 g of antibacterial agent particles (silver-supported zirconium phosphate, diluted with ethanol; solid content concentration 40% by mass) having a mode diameter of 0.5 μm and having the content of particles having a particle size of 1 μm or greater adjusted to 11% by volume, and 0.12 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume.

Next, antibacterial film A-17-1 (average film thickness: 0.2 μm) and antibacterial film A-17-2 (average film thickness: 0.8 μm) were obtained by the bar coating method, using antibacterial composition A-17.

Next, antibacterial film A-17-3 (average film thickness: 0.3 μm) was obtained by the wiping method, using antibacterial composition A-17. The maximum value of film thickness of antibacterial film A-17-3 was 0.6 μm, and the film thickness difference was 0.5 μm.

The blended antibacterial agent particles had a mode diameter of 0.5 μm and a local maximum value frequency particle size of 1.9 μm. Furthermore, the content of particles having a particle size of 1 μm or greater was 10% by volume.

[Example 18]

Antibacterial composition A-18 was obtained in the same manner as in Example 1, except that the amount of addition of the antibacterial agent particles was changed to 0.12 g, and the amount of addition of the dispersant was changed to 0.36 g.

Next, antibacterial film A-18-1 (average film thickness: 0.2 μm) and antibacterial film A-18-2 (average film thickness: 0.8 μm) were obtained by the bar coating method, using antibacterial composition A-18.

Next, antibacterial film A-18-3 (average film thickness: 0.3 μm) was obtained by the wiping method, using antibacterial composition A-18. The maximum value of film thickness of antibacterial film A-18-3 was 0.5 μm, and the film thickness difference was 0.3 μm.

[Comparative Example 1]

Antibacterial composition B-1 was obtained in the same manner as in Example 1, except that the antibacterial agent particles were changed to 1.2 g of antibacterial agent particles (silver-supported glass, diluted with ethanol; solid content concentration 40% by mass) having a mode diameter of 0.4 μm and having the content of particles having a particle size of 1 μm or greater adjusted to 0% by volume.

Next, antibacterial film β-1-1 (average film thickness: 0.2 μm) and antibacterial film B-1-2 (average film thickness: 0.8 μm) were obtained by the bar coating method, using antibacterial composition B-1.

Next, antibacterial film B-1-3 (average film thickness: 0.3 μm) was obtained by the wiping method, using antibacterial composition B-1. The maximum value of film thickness of antibacterial film B-1-3 was 0.4 μm, and the film thickness difference was 0.3 μm.

The antibacterial agent particles had a mode diameter of 0.4 μm, and the content of particles having a particle size of 1 μm or greater was 0% by volume.

[Comparative Example 2]

Antibacterial composition B-2 was obtained in the same manner as in Example 1, except that the antibacterial agent particles were changed to 1.2 g of antibacterial agent particles (silver-supported glass, diluted with ethanol; solid content concentration 40% by mass) having a mode diameter of 0.4 μm and having the content of particles having a particle size of 1 μm or greater adjusted to 3% by volume.

Next, antibacterial film B-2-1 (average film thickness: 0.2 μm) and antibacterial film B-2-2 (average film thickness: 0.8 μm) were obtained by the bar coating method, using antibacterial composition B-2.

Next, antibacterial film B-2-3 (average film thickness: 0.3 μm) was obtained by the wiping method, using antibacterial composition B-2. The maximum value of film thickness of antibacterial film B-2-3 was 0.6 μm, and the film thickness difference was 0.5 μm.

The antibacterial agent particles had a mode diameter of 0.4 μm, and the content of particles having a particle size of 1 μm or greater was 3% by volume.

[Comparative Example 3]

Antibacterial composition B-3 was obtained in the same manner as in Example 1, except that the antibacterial agent particles were changed to 1.2 g of antibacterial agent particles (silver-supported glass, diluted with ethanol; solid content concentration 40% by mass) having a mode diameter of 0.4 μm and having the content of particles having a

particle size of 1 μm or greater adjusted to 53% by volume.

Next, antibacterial film B-3-1 (average film thickness: 0.2 μm) and antibacterial film B-3-2 (average film thickness: 0.8 μm) were obtained by the bar coating method, using antibacterial composition B-3.

Next, antibacterial film B-3-3 (average film thickness: 0.3 μm) was obtained by the wiping method, using antibacterial composition B-3. The maximum value of film thickness of antibacterial film B-3-3 was 0.5 μm, and the film thickness difference was 0.4 μm.

The antibacterial agent particles had a mode diameter of 0.4 μm, and the content of particles having a particle size of 1 μm or greater was 53% by volume.

[Comparative Example 4]

Antibacterial composition B-4 was obtained in the same manner as in Example 1, except that the antibacterial agent particles were changed to 1.2 g of antibacterial agent particles (silver-supported glass, diluted with ethanol; solid content concentration 40% by mass) having a mode diameter of 1.9 μm and having the content of particles having a particle size of 1 μm or greater adjusted to 86% by volume.

Next, antibacterial film B-4-1 (average film thickness: 0.2 μm) and antibacterial film B-4-2 (average film thickness: 0.8 μm) were obtained by the bar coating method, using antibacterial composition B-4.

Next, antibacterial film B-4-3 (average film thickness: 0.3 μm) was obtained by the wiping method, using antibacterial composition B-4. The maximum value of film thickness of antibacterial film B-4-3 was 0.8 μm, and the film thickness difference was 0.6 μm.

The antibacterial agent particles had a mode diameter of 1.9 μm, and the content of particles having a particle size of 1 μm or greater was 86% by volume.

[Comparative Example 5]

Antibacterial composition B-5 was obtained in the same manner as in Example 1, except that the antibacterial agent particles were changed to 1.2 g of antibacterial agent particles (silver-supported glass, diluted with ethanol; solid content concentration 40% by mass) having a mode diameter of 5.2 μm and having the content of particles having a particle size of 1 μm or greater adjusted to 92% by volume.

Next, antibacterial film B-5-1 (average film thickness: 0.2 μm) and antibacterial film B-5-2 (average film thickness: 0.8 μm) were obtained by the bar coating method, using antibacterial composition B-5.

Next, antibacterial film B-5-3 (average film thickness: 0.3 μm) was obtained by the wiping method, using antibacterial composition B-5. The maximum value of film thickness of antibacterial film B-5-3 was 0.7 μm, and the film thickness difference was 0.5 μm.

The antibacterial agent particles had a mode diameter of 5.2 μm, and the content of particles having a particle size of 1 μm or greater was 92% by volume.

Compositions of the various antibacterial compositions described above are summarized in Table 1. The explanations for various phrases in Table 1 are as follows.

- Antibacterial agent particles (1) and antibacterial agent particles (2): Antibacterial agent particles prior to blending, which were separated by the water sieve method and were used to adjust the antibacterial agent particles containing a metal of various Examples.
- Blend ratio: Ratio at which the antibacterial agent particles (1) and (2), which have been separated by a water sieve method, were blended (unit: volume%).
- Zr phosphate: Zirconium phosphate

[Table 1]

| | Antibacterial agent particles containing metal | | | | | | | | | | | | | Silicate-based compound/ thermoplastic resin |
|---|---|---|---|---|---|---|---|---|---|---|---|---|---|---|
| | | | | Blend ratio | | Antibacterial agent particles (1) | | | | Antibacterial agent particles (2) | | | | |
| | Content of particles having particle size of 1 μm or greater (vol%) | Mode diameter (μm) | Local maximum value frequency particle size (μm) | Antibacterial agent particles (1) (vol%) | Antibacterial agent particles (2) (vol%) | Carrier | Metal | Mode diameter (μm) | Content of particle having particle size of 1 μm or greater (vol%) | Carrier | Metal | Mode diameter (μm) | Content of particles having particle size of 1 μm or greater (vol%) | |
| Example 1 | 6 | 0.4 | | 100 | | Glass | Ag | 0.4 | 6 | | | | | Silicate-based compound |
| Example 2 | 15 | 0.4 | | 100 | | Glass | Ag | 0.4 | 15 | | | | | Silicate-based compound |
| Example 3 | 22 | 0.4 | | 100 | | Glass | Ag | 0.4 | 22 | | | | | Silicate-based compound |
| Example 4 | 34 | 0.4 | | 100 | | Glass | Ag | 0.4 | 34 | | | | | Silicate-based compound |
| Example 5 | 45 | 0.4 | | 100 | | Glass | Ag | 0.4 | 45 | | | | | Silicate-based compound |
| Example 6 | 9 | 0.4 | 1.9 | 90 | 10 | Glass | Ag | 0.4 | 0 | Glass | Ag | 1.9 | 86 | Silicate-based compound |
| Example 7 | 13 | 0.4 | 1.9 | 85 | 15 | Glass | Ag | 0.4 | 0 | Glass | Ag | 1.9 | 86 | Silicate-based compound |
| Example 8 | 17 | 0.4 | 1.9 | 80 | 20 | Glass | Ag | 0.4 | 0 | Glass | Ag | 1.9 | 86 | Silicate-based compound |
| Example 9 | 34 | 0.4 | 1.9 | 60 | 40 | Glass | Ag | 0.4 | 0 | Glass | Ag | 1.9 | 86 | Silicate-based compound |
| Example 10 | 9 | 0.4 | 5.2 | 90 | 10 | Glass | Ag | 0.4 | 0 | Glass | Ag | 5.2 | 92 | Silicate-based compound |
| Example 11 | 9 | 0.4 | 1.9<br>5.2 | 90 | 7<br>3 | Glass | Ag | 0.4 | 0 | Glass | Ag | 1.9<br>5.2 | 86<br>92 | Silicate-based compound |

(continued)

| | Antibacterial agent particles containing metal | | | | | | | | | | | | | Silicate-based compound/ thermoplastic resin |
|---|---|---|---|---|---|---|---|---|---|---|---|---|---|---|
| | | | | Blend ratio | | Antibacterial agent particles (1) | | | | Antibacterial agent particles (2) | | | | |
| | Content of particles having particle size of 1 μm or greater (vol%) | Mode diameter (μm) | Local maximum value frequency particle size (μm) | Antibacterial agent particles (1) (vol%) | Antibacterial agent particles (2) (vol%) | Carrier | Metal | Mode diameter (μm) | Content of particle having particle size of 1 μm or greater (vol%) | Carrier | Metal | Mode diameter (μm) | Content of particles having particle size of 1 μm or greater (vol%) | |
| Example 12 | 9 | 0.4 | 1.9 | 90 | 10 | Glass | Ag | 0.4 | 0 | Glass | Ag-Cu | 1.9 | 86 | Silicate-based compound |
| Example 13 | 9 | 0.4 | 1.9 | 90 | 10 | Glass | Ag | 0.4 | 0 | Glass | Ag-Zn | 1.9 | 86 | Silicate-based compound |
| Example 14 | 9 | 0.4 | 1.9 | 90 | 10 | Glass | Ag | 0.4 | 0 | Glass | Ag | 1.9 | 86 | Thermoplastic resin (acrylic) |
| Example 15 | 9 | 0.4 | 1.9 | 90 | 10 | Glass | Ag | 0.4 | 0 | Glass | Ag | 1.9 | 86 | Thermoplastic resin (urethane-based) |
| Example 16 | 12 | 0.6 | 1.9 | 90 | 10 | Zeolite | Ag | 0.6 | 13 | Glass | Ag | 1.9 | 86 | Silicate-based compound |
| Example 17 | 10 | 0.5 | 1.9 | 90 | 10 | Zr phosphate | Ag | 0.5 | 11 | Glass | Ag | 1.9 | 86 | Silicate-based compound |
| Example 18 | 6 | 0.4 | | 100 | | Glass | Ag | 0.4 | 6 | | | | | Silicate-based compound |
| Comparative Example 1 | 0 | 0.4 | | 100 | | Glass | Ag | 0.4 | 0 | | | | | Silicate-based compound |
| Comparative Example 2 | 3 | 0.4 | | 100 | | Glass | Ag | 0.4 | 3 | | | | | Silicate-based compound |
| Comparative Example 3 | 53 | 0.4 | | 100 | | Glass | Ag | 0.4 | 53 | | | | | Silicate-based compound |

(continued)

| | Antibacterial agent particles containing metal | | | | | | | | | | | | | Silicate-based compound/ thermoplastic resin |
|---|---|---|---|---|---|---|---|---|---|---|---|---|---|---|
| | | | | Blend ratio | | Antibacterial agent particles (1) | | | | Antibacterial agent particles (2) | | | | |
| | Content of particles having particle size of 1 μm or greater (vol%) | Mode diameter (μm) | Local maximum value frequency particle size (μm) | Antibacterial agent particles (1) (vol%) | Antibacterial agent particles (2) (vol%) | Carrier | Metal | Mode diameter (μm) | Content ofparticle having particle size of 1 μm or greater (vol%) | Carrier | Metal | Mode diameter (μm) | Content of particles having particle size of 1 μm or greater (vol%) | |
| Comparative Example 4 | 86 | 1.9 | | | 100 | | | | | Glass | Ag | 1.9 | 86 | Silicate-based compound |
| Comparative Example 5 | 92 | 5.2 | | | 100 | | | | | Glass | Ag | 5.2 | 92 | Silicate-based compound |

[Evaluation]

The antibacterial films obtained using the antibacterial compositions were evaluated for the following items. Evaluation methods will be described below, and the evaluation results will be shown in Table 2.

[Antibacterial properties]

The antibacterial properties at the surface of an antibacterial film were evaluated by the following method. The test was carried out according to JIS Z 2801:2010. First, an antibacterial film A-1-1 (average film thickness 0.2 μm)-attached PET base material was cut into a predetermined size, and thus a specimen was prepared. On the surface of the specimen thus prepared, an *Escherichia coli* solution that had been adjusted to have a predetermined number of bacterial cells was inoculated, and the specimen was incubated (temperature 35°C, relative humidity 90%). The incubation time was set to 3 hours, and the antibacterial activity value after the test was calculated and evaluated according to the following criteria. For practical use, grade "B" or higher is preferred.

Antibacterial films A-2-1 to A-18-1 and antibacterial film β-1-1 to B-5-1 were also tested and evaluated in the same manner as described above.

"A": The antibacterial activity value is 3.5 or greater.
"B": The antibacterial activity value is 2.0 or greater and less than 3.5.
"C": The antibacterial activity value is less than 2.0.

[Uniform antibacterial properties]

The uniformity of antibacterial properties within the plane of an antibacterial film (uniform antibacterial properties) was evaluated by the following method. First, the antibacterial activity value at the antibacterial film surface was calculated for antibacterial film A-1-2 (average film thickness 0.8 μm) by a method similar to the method for "Antibacterial properties". Next, a value obtained by the following formula (difference in the antibacterial activity value) was evaluated according to the following criteria. For practical use, grade "B" or higher is preferred.

Antibacterial film A-2-2 to A-18-2 and antibacterial films B-1-2 to B-5-2 were also tested and evaluated in the same manner as described above.

(Formula) (Antibacterial activity value of antibacterial film having average film thickness of 0.2 μm) - (antibacterial activity value of antibacterial film having average film thickness of 0.8 μm)

"A": The difference in the antibacterial activity value is less than 0.5.
"B": The difference in the antibacterial activity value is 0.5 or greater and less than 1.0.
"C": The difference in the antibacterial activity value is 1.0 or greater.

[Haze]

The haze at the surface of an antibacterial film was evaluated by the following method. The haze values before and after wiping the surface of antibacterial film A-1-1 (average film thickness: 0.2 μm) with a nonwoven fabric ("BEMCOT (registered trademark) M-3II" manufactured by Asahi Kasei Fibers Corporation) were measured using a haze meter ("NDH-2000" manufactured by Nippon Denshoku Industries Co., Ltd.). The test was carried out according to JIS K 7105, and the haze was evaluated according to the following criteria. For practical use, grade "B" or higher is preferred.

Antibacterial films A-2-1 to A-18-1 and antibacterial films β-1-1 to B-5-1 (all are antibacterial films having an average film thickness of 0.2 μm produced by the bar coating method) were also tested and evaluated in the same manner as described above.

"A": The haze is less than 5%.
"B": The haze is 5% or greater and less than 10%.
"C": The haze is 10% or greater and less than 15%.
"D": The haze is 15% or greater.

[Interference fringe and wipe coating unevenness]

The interference fringe and the wipe coating unevenness at the surface of an antibacterial film were evaluated by the following method. Antibacterial film A-1-3 (average film thickness: 0.3 μm) was inspected under a three-wavelength fluorescent lamp and was evaluated according to the following criteria. For practical use, grade "B" or higher is preferred.
Antibacterial films A-1-3 to A-18-3 and antibacterial films B-1-3 to B-5-3 (all are antibacterial films having an average film thickness of 0.3 μm produced according to the wiping method) were also tested and evaluated in the same manner as described above.

"A": The interference fringe or wipe coating unevenness is not observable or is almost not observable.
"B": The interference fringe or wipe coating unevenness is slightly observable.
"C": The interference fringe or wipe coating unevenness is clearly observable.
"D": The interference fringe or wipe coating unevenness is strongly observable.

[Pencil hardness]

The pencil hardness of an antibacterial film was evaluated by the following method. The pencil hardness of antibacterial film A-1-1 (average film thickness: 0.2 μm) was measured using a pencil scratch hardness tester ("553-M" manufactured by Yasuda Seiki Seisakusho, Ltd.). The test was carried out according to JIS K 5600, and antibacterial films A-2-1 to A-18-1 and antibacterial films β-1-1 to B-5-1 (all are antibacterial films having an average film thickness of 0.2 μm produced according to the bar coating method) were also tested and evaluated by a similar method. The pencil hardness of an antibacterial film implies that "H" is higher than "B".

[Water contact angle]

The water contact angle at the surface of an antibacterial film was evaluated by the following method. The water contact angle of antibacterial film A-1-1 (average film thickness: 0.2 μm) was measured using a contact angle meter ("DROP MASTER 300" manufactured by Kyowa Interface Science Co., Ltd.). In an environment at a temperature of 25°C and a relative humidity of 60%, 2 μl of pure water was dropped, and the contact angle "degrees (°)" was measured by the θ/2 method. The arithmetic mean value of five measured values was designated as the water contact angle. The water contact angle thus obtained was evaluated according to the following criteria.
In a case in which the water contact angle at the surface of an antibacterial film is less than 20 degrees, moisture in air is likely to adsorb to the surface of the antibacterial film, and metal ions can be efficiently released from the antibacterial agent. Therefore, the antibacterial properties are enhanced. Furthermore, even in a case in which dirt is attached to the antibacterial film, water can easily penetrate between the antibacterial film surface and the dirt, and therefore, dirt removal by water wiping is satisfactorily achieved.
Furthermore, antibacterial films A-2-1 to A-18-1 and antibacterial films β-1-1 to B-5-1 (all are antibacterial films having an average film thickness of 0.2 μm produced according to the bar coating method) were also tested and evaluated by a similar method.

"A": The water contact angle is smaller than 20 degrees.
"B": The water contact angle is 20 degrees or larger and smaller than 50 degrees.
"C": The water contact angle is 50 degrees or larger.

[Light resistance]

The light resistance of an antibacterial film was measured by the following method. Antibacterial film A-6-1 (average film thickness: 0.2 μm) was irradiated for 24 hours in a continuous light irradiation mode using an accelerated weather-resistance tester ("Super UV Tester SUV-W261" manufactured by Iwasaki Electric Co., Ltd.), and the difference in the antibacterial activity value at the antibacterial film surface before and after irradiation was calculated by the following formula.

(Formula) (Antibacterial activity value before light irradiation) - (antibacterial activity value after light irradiation)

A value calculated by the above-described method was evaluated according to the following criteria.

Antibacterial films A-12-1 and A-13-1 (all are antibacterial films having an average film thickness of 0.2 μm produced by the bar coating method) were also tested and evaluated by a similar method.

"A": The difference in the antibacterial activity value is less than 0.2.
"B": The difference in the antibacterial activity value is 0.2 or greater.

[Antifungal properties]

Regarding the antifungal properties, antibacterial film A-6-1 (average film thickness: 0.2 μm) was exposed in a bathroom for two weeks, subsequently the presence or absence of the growth of molds was checked, and the antifungal properties were evaluated according to the following criteria.
Antibacterial films A-12-1 and A-13-1 were also tested by a similar method.

"A": Molds are not observable.
"B": Molds are observable.

In the following Table 2, the average film thicknesses, maximum film thicknesses, and film thickness differences of antibacterial films A-1-3 to A-18-3 and B-1-3 to B-5-3 are described together.

[Table 2]

| | Antibacterial film | | | Evaluation | | | | | | | | |
|---|---|---|---|---|---|---|---|---|---|---|---|---|
| | | | | Antibacterial properties | | Haze | | Interference fringe and coating unevenness | Pencil hardness | Water contact angle | Light resistance | Antifungal properties |
| | Average film thickness (μm) | Maximum film thickness (μm) | Film thickness variation (μm) | Antibacterial properties | Uniformity | Before wiping | After wiping | | | | | |
| Example 1 | 0.3 | 0.5 | 0.3 | A | A | A | A | A | H | A | | |
| Example 2 | 0.3 | 0.5 | 0.4 | A | A | A | A | A | H | A | | |
| Example 3 | 0.3 | 0.6 | 0.5 | A | B | B | A | A | H | A | | |
| Example 4 | 0.3 | 0.6 | 0.5 | A | B | B | A | B | H | A | | |
| Example 5 | 0.3 | 0.6 | 0.6 | B | B | C | B | B | H | A | | |
| Example 6 | 0.3 | 0.6 | 0.5 | A | A | A | A | A | H | A | B | B |
| Example 7 | 0.3 | 0.6 | 0.5 | A | A | A | A | A | H | A | | |
| Example 8 | 0.3 | 0.7 | 0.6 | A | B | B | A | A | H | A | | |
| Example 9 | 0.3 | 0.7 | 0.6 | B | B | B | A | B | H | A | | |
| Example 10 | 0.3 | 0.6 | 0.5 | A | A | C | B | B | H | A | | |
| Example 11 | 0.3 | 0.6 | 0.5 | A | A | C | B | B | H | A | | |
| Example 12 | 0.3 | 0.7 | 0.5 | A | A | A | A | A | H | A | A | A |
| Example 13 | 0.3 | 0.7 | 0.6 | A | A | A | A | A | H | A | A | A |
| Example 14 | 0.3 | 0.6 | 0.5 | B | A | B | A | A | B | C | | |
| Example 15 | 0.3 | 0.5 | 0.4 | B | A | B | A | A | B | C | | |
| Example 16 | 0.3 | 0.6 | 0.5 | A | A | B | B | A | H | A | | |
| Example 17 | 0.3 | 0.6 | 0.5 | A | A | B | B | A | H | A | | |
| Example 18 | 0.3 | 0.5 | 0.3 | B | A | A | A | A | H | A | | |
| Comparative Example 1 | 0.3 | 0.4 | 0.3 | A | C | A | A | D | H | A | | |
| Comparative Example 2 | 0.3 | 0.6 | 0.5 | A | C | A | A | D | H | A | | |

(continued)

| | Antibacterial film | | | Evaluation | | | | | | | | |
|---|---|---|---|---|---|---|---|---|---|---|---|---|
| | | | | Antibacterial properties | | Haze | | Interference fringe and coating unevenness | Pencil hardness | Water contact angle | Light resistance | Antifungal properties |
| | Average film thickness (μm) | Maximum film thickness (μm) | Film thickness variation (μm) | Antibacterial properties | Uniformity | Before wiping | After wiping | | | | | |
| Comparative Example 3 | 0.3 | 0.5 | 0.4 | B | C | D | C | C | H | A | | |
| Comparative Example 4 | 0.3 | 0.8 | 0.6 | B | C | C | B | B | H | A | | |
| Comparative Example 5 | 0.3 | 0.7 | 0.5 | C | C | D | C | C | H | A | | |

From the results shown in Table 2, it was found that the antibacterial films of Examples 1 to 18 formed using antibacterial compositions each comprising antibacterial agent particles containing a metal; and at least one selected from the group consisting of a silicate-based compound and a thermoplastic resin having a minimum film-forming temperature of 0°C to 35°C, in which the antibacterial agent particles containing a metal have the maximum value of frequency at a particle size of 0.1 μm or greater and less than 1 μm in a volume-based particle size distribution, and the content of particles having a particle size of 1 μm or greater is 5% to 50% by volume, have excellent uniform antibacterial properties.

On the other hand, it was found that the antibacterial films of Comparative Examples 1 to 5 have inferior uniform antibacterial properties, and thus desired effects cannot be obtained.

The antibacterial films of Examples 1, 2, 6, 7, and 10 to 18, in which the content of particles having a particle size of 1 μm or greater in a volume-based particle size distribution was 5% to 15% by volume, showed superior uniform antibacterial properties.

Explanation of References

101: Mode diameter
102: Local maximum value frequency particle size
110: Particle size distribution

## Claims

1. An antibacterial composition, comprising:

   antibacterial agent particles containing a metal; and
   at least one selected from the group consisting of a silicate-based compound and a thermoplastic resin having a minimum film-forming temperature of 0°C to 35°C,
   wherein the antibacterial agent particles containing a metal have the maximum value of frequency at a particle size of 0.1 μm or greater and less than 1 μm in a volume-based particle size distribution, and the content of particles having a particle size of 1 μm or greater is 5% to 50% by volume.

2. The antibacterial composition according to claim 1, wherein the content of particles having a particle size of 1 μm or greater is 5% to 15% by volume.

3. The antibacterial composition according to claim 1 or 2, wherein the antibacterial agent particles containing a metal further have a local maximum value of frequency at a particle size of 1 μm or greater in the particle size distribution.

4. The antibacterial composition according to any one of claims 1 to 3, wherein the antibacterial agent particles containing a metal contain at least one metal selected from the group consisting of silver, copper, and zinc.

5. The antibacterial composition according to any one of claims 1 to 4, further comprising a solvent.

6. The antibacterial composition according to claim 5, wherein the solvent includes at least one selected from the group consisting of water and an alcohol-based solvent.

7. The antibacterial composition according to any one of claims 1 to 6, wherein the antibacterial agent particles containing a metal are metal-supported carriers each including a carrier and a metal supported on the carrier.

8. The antibacterial composition according to claim 7, wherein the carrier is an inorganic compound.

9. An antibacterial film, comprising:

   antibacterial agent particles containing a metal; and
   at least one selected from the group consisting of a silicate-based compound and a thermoplastic resin having a minimum film-forming temperature of 0°C to 35°C,
   the antibacterial film having an average film thickness of 0.05 to 1 μm,

wherein the antibacterial agent particles containing a metal have the maximum value of frequency at a particle size of 0.1 μm or greater and less than 1 μm in a volume-based particle size distribution, the content of particles having a particle size of 1 μm or greater is 5% to 50% by volume, and the maximum value of the film thickness is 0.5 to 3 μm.

**10.** An antibacterial film, comprising:

antibacterial agent particles containing a metal; and
at least one selected from the group consisting of a silicate-based compound and a thermoplastic resin having a minimum film-forming temperature of 0°C to 35°C,
the antibacterial film having an average film thickness of 0.05 to 1 μm,
wherein the antibacterial agent particles containing a metal have the maximum value of frequency at a particle size of 0.1 μm or greater and less than 1 μm in a volume-based particle size distribution, the content of particles having a particle size of 1 μm or greater is 5% to 50% by volume, and the difference between the maximum value and the minimum value of the film thickness is 0.1 μm or greater.

**11.** The antibacterial film according to claim 9 or 10, wherein the content of particles having a particle size of 1 μm or greater is 5% to 15% by volume.

**12.** The antibacterial film according to any one of claims 9 to 11, wherein the antibacterial agent particles containing a metal further have a local maximum value of frequency at a particle size of 1 μm or greater in the particle size distribution.

**13.** The antibacterial film according to any one of claims 9 to 12, wherein the antibacterial agent particles containing a metal are metal-supported carriers each including a carrier and a metal supported on the carrier.

**14.** The antibacterial film according to claim 13, wherein the carrier is an inorganic compound.

**15.** A wet wiper comprising a base cloth impregnated with the antibacterial composition according to any one of claims 1 to 8.

**Patentansprüche**

**1.** Antibakterielle Zusammensetzung, umfassend:

ein Metall enthaltende antibakterielle Wirkstoffpartikeln; und
mindestens eines, ausgewählt aus der Gruppe bestehend aus einer Verbindung auf Silikatbasis und einem thermoplastischen Harz mit einer Mindestfilmbildetemperatur von 0 °C bis 35 °C,
wobei die ein Metall enthaltenden antibakteriellen Wirkstoffpartikeln den maximalen Frequenzwert bei einer Partikelgröße von 0,1 μm oder mehr und weniger als 1 μm in einer volumenbasierten Partikelgrößenverteilung aufweisen und der Gehalt an Partikeln mit einer Partikelgröße von 1 μm oder mehr 5 bis 50 Vol.-% beträgt.

**2.** Antibakterielle Zusammensetzung nach Anspruch 1, wobei der Gehalt an Partikeln mit einer Partikelgröße von 1 μm oder mehr 5 bis 15 Vol.-% beträgt.

**3.** Antibakterielle Zusammensetzung nach Anspruch 1 oder 2, wobei die ein Metall enthaltenden antibakteriellen Wirkstoffpartikeln weiter einen lokalen maximalen Frequenzwert bei einer Partikelgröße von 1 μm oder mehr in der Partikelgrößenverteilung aufweisen.

**4.** Antibakterielle Zusammensetzung nach einem der Ansprüche 1 bis 3, wobei die ein Metall enthaltenden antibakteriellen Wirkstoffpartikeln mindestens ein Metall enthalten, ausgewählt aus der Gruppe bestehend aus Silber, Kupfer und Zink.

**5.** Antibakterielle Zusammensetzung nach einem der Ansprüche 1 bis 4, weiter umfassend ein Lösungsmittel.

**6.** Antibakterielle Zusammensetzung nach Anspruch 5, wobei das Lösungsmittel mindestens eines beinhaltet, ausgewählt aus der Gruppe bestehend aus Wasser und einem Lösungsmittel auf Alkoholbasis.

**7.** Antibakterielle Zusammensetzung nach einem der Ansprüche 1 bis 6, wobei die ein Metall enthaltenden antibakteriellen Wirkstoffpartikeln metallgetragene Träger sind, die jeweils einen Träger und ein auf dem Träger getragenes Metall beinhalten.

**8.** Antibakterielle Zusammensetzung nach Anspruch 7, wobei der Träger eine anorganische Verbindung ist.

**9.** Antibakterieller Film, umfassend:

ein Metall enthaltende antibakterielle Wirkstoffpartikeln; und
mindestens eines, ausgewählt aus der Gruppe bestehend aus einer Verbindung auf Silikatbasis und einem thermoplastischen Harz mit einer Mindestfilmbildetemperatur von 0 °C bis 35 °C,
wobei der antibakterielle Film eine durchschnittliche Filmdicke von 0,05 bis 1 μm aufweist,
wobei die ein Metall enthaltenden antibakteriellen Wirkstoffpartikeln den maximalen Frequenzwert bei einer Partikelgröße von 0,1 μm oder mehr und weniger als 1 μm in einer volumenbasierten Partikelgrößenverteilung aufweisen, wobei der Gehalt an Partikeln mit einer Partikelgröße von 1 μm oder mehr 5 bis 50 Vol.-% beträgt und der maximale Wert der Filmdicke 0,5 bis 3 μm beträgt.

**10.** Antibakterieller Film, umfassend:

ein Metall enthaltende antibakterielle Wirkstoffpartikeln; und
mindestens eines, ausgewählt aus der Gruppe bestehend aus einer Verbindung auf Silikatbasis und einem thermoplastischen Harz mit einer Mindestfilmbildetemperatur von 0 °C bis 35 °C,
wobei der antibakterielle Film eine durchschnittliche Filmdicke von 0,05 bis 1 μm aufweist,
wobei die ein Metall enthaltenden antibakteriellen Wirkstoffpartikeln den maximalen Frequenzwert bei einer Partikelgröße von 0,1 μm oder mehr und weniger als 1 μm in einer volumenbasierten Partikelgrößenverteilung aufweisen, wobei der Gehalt an Partikeln mit einer Partikelgröße von 1 μm oder mehr 5 bis 50 Vol.-% beträgt und die Differenz zwischen dem Maximalwert und dem Minimalwert der Filmdicke 0,1 μm oder mehr beträgt.

**11.** Antibakterieller Film nach Anspruch 9 oder 10, wobei der Gehalt an Partikeln mit einer Partikelgröße von 1 μm oder mehr 5 bis 15 Vol.-% beträgt.

**12.** Antibakterielle Zusammensetzung nach einem der Ansprüche 9 bis 11, wobei die ein Metall enthaltenden antibakteriellen Wirkstoffpartikeln weiter einen lokalen maximalen Frequenzwert bei einer Partikelgröße von 1 μm oder mehr in der Partikelgrößenverteilung aufweisen.

**13.** Antibakterieller Film nach einem der Ansprüche 9 bis 12, wobei die ein Metall enthaltenden antibakteriellen Wirkstoffpartikeln metallgetragene Träger sind, die jeweils einen Träger und ein auf dem Träger getragenes Metall beinhalten.

**14.** Antibakterieller Film nach Anspruch 13, wobei der Träger eine anorganische Verbindung ist.

**15.** Feuchtreinigungstuch, umfassend ein Grundgewebe, das mit der antibakteriellen Zusammensetzung nach einem der Ansprüche 1 bis 8 imprägniert ist.

## Revendications

**1.** Composition antibactérienne, comprenant :

des particules d'agent antibactérien contenant un métal ; et
au moins un élément sélectionné dans le groupe constitué par un composé à base de silicate et une résine thermoplastique ayant une température de formation de film minimale de 0 °C à 35 °C,
dans laquelle les particules d'agent antibactérien contenant un métal ont la valeur maximale de fréquence à une taille de particule de 0,1 μm ou plus et moins de 1 μm dans une distribution de taille de particule basée sur le volume, et la teneur en particules ayant une taille de particule de 1 μm ou plus est de 5 % à 50 % en volume.

**2.** Composition antibactérienne selon la revendication 1, dans laquelle la teneur en particules ayant une taille de particule de 1 μm ou plus est de 5 % à 15 % en volume.

3. Composition antibactérienne selon la revendication 1 ou 2, dans laquelle les particules d'agent antibactérien contenant un métal ont en outre une valeur maximale locale de fréquence à une taille de particule de 1 μm ou plus dans la distribution de taille de particule.

4. Composition antibactérienne selon l'une quelconque des revendications 1 à 3, dans laquelle les particules d'agent antibactérien contenant un métal contiennent au moins un métal sélectionné dans le groupe constitué par l'argent, le cuivre et le zinc.

5. Composition antibactérienne selon l'une quelconque des revendications 1 à 4, comprenant en outre un solvant.

6. Composition antibactérienne selon la revendication 5, dans laquelle le solvant inclut au moins un élément sélectionné dans le groupe constitué par l'eau et un solvant à base d'alcool.

7. Composition antibactérienne selon l'une quelconque des revendications 1 à 6, dans laquelle les particules d'agent antibactérien contenant un métal sont des porteurs supportés par métal incluant chacun un porteur et un métal supporté sur le porteur.

8. Composition antibactérienne selon la revendication 7, dans laquelle le porteur est un composé inorganique.

9. Film antibactérien, comprenant :

des particules d'agent antibactérien contenant un métal ; et
au moins un élément sélectionné dans le groupe constitué par un composé à base de silicate et une résine thermoplastique ayant une température de formation de film minimale de 0 °C à 35 °C,
le film antibactérien ayant une épaisseur de film moyenne de 0,05 à 1 μm,
dans laquelle les particules d'agent antibactérien contenant un métal ont la valeur maximale de fréquence à une taille de particule de 0,1 μm ou plus et moins de 1 μm dans une distribution de taille de particule basée sur le volume, la teneur en particules ayant une taille de particule de 1 μm ou plus est de 5 % à 50 % en volume et la valeur maximale de l'épaisseur de film est de 0,5 à 3 μm.

10. Film antibactérien, comprenant :

des particules d'agent antibactérien contenant un métal ; et
au moins un élément sélectionné dans le groupe constitué par un composé à base de silicate et une résine thermoplastique ayant une température de formation de film minimale de 0 °C à 35 °C,
le film antibactérien ayant une épaisseur de film moyenne de 0,05 à 1 μm,
dans lequel les particules d'agent antibactérien contenant un métal ont la valeur maximale de fréquence à une taille de particule de 0,1 μm ou plus et moins de 1 μm dans une distribution de taille de particule basée sur le volume, la teneur en particules ayant une taille de particule de 1 μm ou plus est de 5 % à 50 % en volume et la différence entre la valeur maximale et la valeur minimale de l'épaisseur de film est de 0,1 μm ou plus.

11. Film antibactérien selon la revendication 9 ou 10, dans lequel la teneur en particules ayant une taille de particule de 1 μm ou plus est de 5 % à 15 % en volume.

12. Film antibactérien selon l'une quelconque des revendications 9 à 11, dans lequel les particules d'agent antibactérien contenant un métal ont en outre une valeur maximale locale de fréquence à une taille de particule de 1 μm ou plus dans la distribution de taille de particule.

13. Film antibactérien selon l'une quelconque des revendications 9 à 12, dans lequel les particules d'agent antibactérien contenant un métal sont des porteurs supportés par métal incluant chacun un porteur et un métal supporté sur le porteur.

14. Film antibactérien selon la revendication 13, dans lequel le porteur est un composé inorganique.

15. Racloir humide comprenant un tissu de base imprégné avec la composition antibactérienne selon l'une quelconque des revendications 1 à 8.

FIG. 1

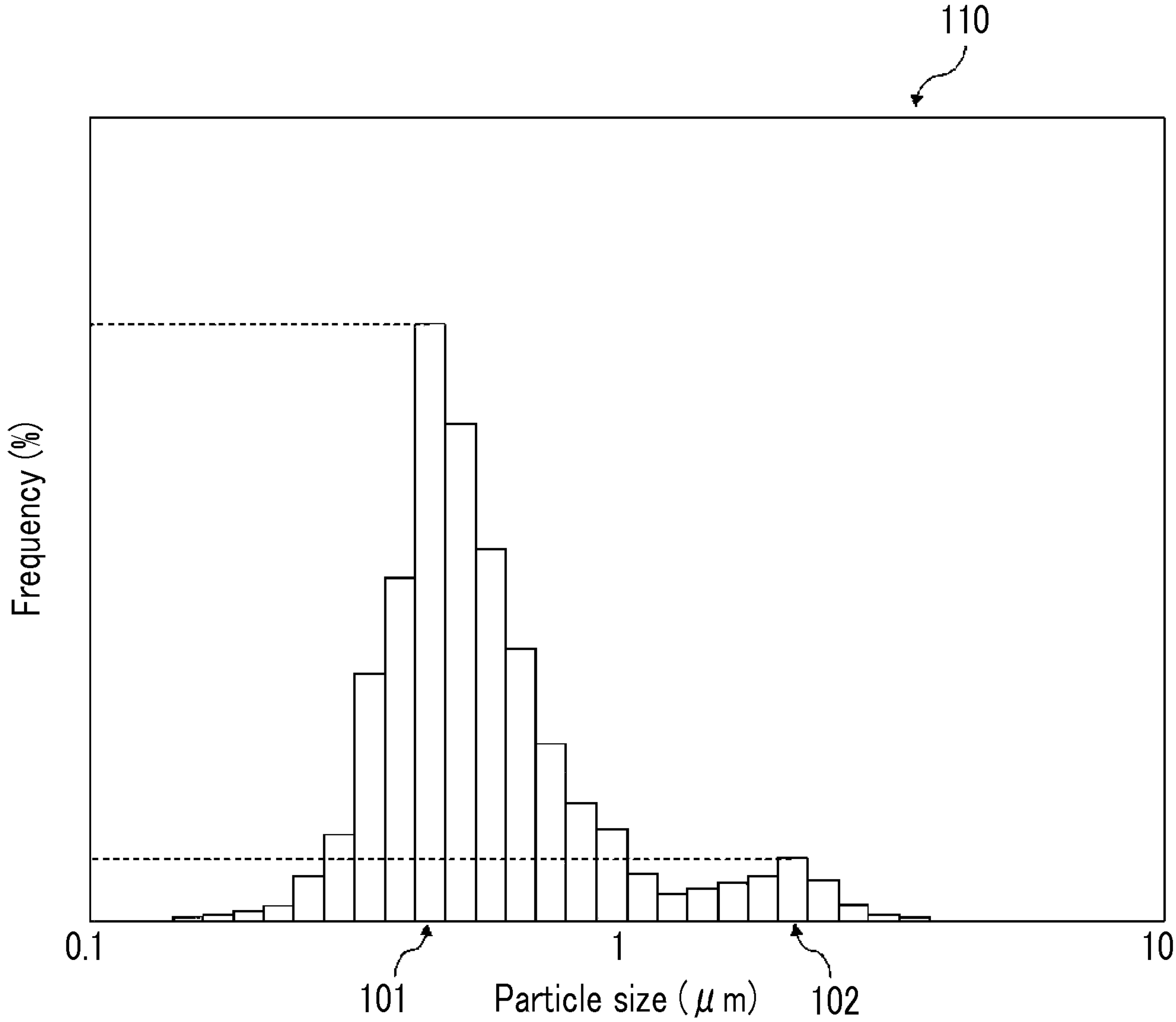

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008213206 A